# EUROPÄISCHE PATENTSCHRIFT

(11) **EP 3 333 136 B1**
(45) Veröffentlichungstag und Bekanntmachung des Hinweises auf die Patenterteilung: **16.02.2022**
(21) Anmeldenummer: 17206210.1
(22) Anmeldetag: 08.12.2017
(51) Int. Cl.: C03B 23/04, C03B 23/18, B23K 26/00, B65C 3/02, B41M 5/24, B41M 5/26

(54) **VERFAHREN ZUM WEITERVERARBEITEN EINES GLASROHR-HALBZEUGS**
METHOD OF PROCESSING A SEMIFINISHED GLASS TUBE
PROCÉDÉ DE TRAITEMENT ULTÉRIEUR D'UN DEMI-PRODUIT SOUS LA FORME DE TUBE DE VERRE

(30) Priorität: 08.12.2016 DE 102016123865; 30.12.2016 DE 102016125944; 03.02.2017 DE 102017102161
(43) Veröffentlichungstag der Anmeldung: 13.06.2018
(73) Patentinhaber: SCHOTT AG, 55122 Mainz (DE)
(72) Erfinder: Wirth, Andreas, 9055 Bühle (CH); Witzmann, André, 95679 Waldershof (DE); Trinks, Ulla, 95666 Mitterteich (DE)
(74) Vertreter: Fuchs Patentanwälte Partnerschaft mbB

(56) Entgegenhaltungen:
- US-A1- 2015 064 779
- WIKIP: "Glassblowing (Wikipedia)", INTERNET CITATION, 8. Februar 2011 (2011-02-08), Seiten 1-8, XP007919403, Gefunden im Internet: URL:http://en.wikipedia.org/w/index.php?ol did=412663373 [gefunden am 2011-09-12]

## Beschreibung

### GEBIET DER ERFINDUNG

Die vorliegende Erfindung betrifft allgemein die Weiterverarbeitung von Glasrohr-Halbzeugen zu Endprodukten, insbesondere zu Hohlglasprodukten, und betrifft insbesondere die Weiterverarbeitung von Glasrohren zu eng tolerierten Endprodukten, wie beispielsweise Behältern zur Aufbewahrung von pharmazeutischen, medizinischen oder auch kosmetischen Substanzen, wie beispielsweise Vials, Karpulen oder Spritzenkörpern. Die Weiterverarbeitung der Glasrohr-Halbzeuge kann dabei auch eine zumindest abschnittsweise durchgeführte thermische Umformung zu Endprodukten bzw. Hohlglasprodukten beinhalten.

### STAND DER TECHNIK

Zur Weiterverarbeitung von Glasrohren müssen die Prozessparameter einer Weiterverarbeitungsanlage möglichst gut auf die Eigenschaften eines jeweiligen Glasrohrs eingestellt werden, um eine optimale Qualität von Endprodukten zu gewährleisten. Dies ist insbesondere zur Herstellung von eng tolerierten Endprodukten schwierig und aufwändig.

Zur Erhöhung der Qualität solcher Endprodukte werden nach dem Stand der Technik die relevanten Eigenschaften von Glasrohren bei einem weiterverarbeitenden Betrieb mittels geeigneter Messeinrichtungen ermittelt. Erst dann können die relevanten Prozessparameter entsprechend eingestellt werden. Dies verzögert nicht nur die Weiterverarbeitung von Glasrohren, sondern macht diese auch aufwändig und kostspielig.

Aus dem Stand der Technik sind diverse Verfahren zur Markierung und Codierung von Glasrohr-Halbzeugen bekannt. Diese werden jedoch nicht zur Codierung von Eigenschaften der Glasrohr-Halbzeuge in solcher Weise eingesetzt, dass die relevanten Daten direkt für einen weiterverarbeitenden Betrieb zur Verfügung stehen und direkt von diesem weiter verwendet werden können.

Zur Markierung oder Codierung von Glas sind aus dem Stand der Technik Verfahren bekannt, bei denen Markierungen oder dergleichen unmittelbar in das Glasmaterial eingeschrieben werden. Ein derartiges Verfahren ist beispielsweise in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Dabei wird das Glas abschnittsweise mit einem Laserpuls zur Aufbringung einer Markierung auf der Oberfläche beaufschlagt. Die Markierung ist deutlich sichtbar und kann insbesondere über eine von der Markierung ausgeübte Linsenwirkung zuverlässig ausgelesen werden, kann spannungsfrei bereits während der Herstellung bei hohen Temperaturen aufgebracht werden und eignet sich deshalb zum Aufbringen der Markierung bereits während der Herstellung von Glasrohr-Halbzeugen, also während der eigentlichen Rohrformgebung. Ein besonderer Vorteil dieses Verfahrens besteht darin, dass die Markierung bei Temperaturen oberhalb der Transformationstemperatur des Glases aufgebracht werden kann, ohne dass die Temperatur des Glasrohrstrangs nach der eigentlichen Rohrformgebung erneut auf derart hohe Temperaturen erhöht werden müsste. Mit dem Verfahren können Markierungen zur Bekämpfung der Produktpiraterie, aber auch Marken, Firmenlogos oder sonstige Produktausstattungen auf den Glasrohrstrang aufgebracht werden.

Weitere Verfahren zur Markierung von Glas-Substraten sind in WO 2004 000749 A1 und WO 2009 128893 A1 offenbart.

DE 103 35 247 A1 offenbart ein Verfahren zur Schnittmusteroptimierung von Flachglas.

Der Wikipedia-Artikel "Glassblowing", 08-02-2011, XP007919403 offenbart allgemein die Herstellung von Glasbehältern aus Rohrglas durch die Technik des Glasblasens. Es ist jedoch nicht offenbart, dass die Weiterverarbeitung eines Glasrohr-Halbzeugs an die Fehlerdaten, die für das Glasrohr-Halbzeug ausgelesen wurden, unter der Kontrolle einer elektronischen Steuereinrichtung angepasst wird, also in geeigneter Weise "automatisiert" durchgeführt wird.

US 2015 064 779 A1 der Anmelderin offenbart die Herstellung von Glasrohren mit Endabschnitten mit nicht-kreisförmigem Querschnitt aus Glasrohren mit kreisförmigem Querschnitt. Dabei können fehlerhafte Abschnitte des Glasrohr-Halbzeugs abgelängt, aussortiert und nicht weiterverarbeitet werden, um ausschließlich Endprodukte ohne die in den fehlerhaften Abschnitten festgestellten Fehler hergestellt werden können. Es wird dabei die Aussortierung von ungeeigneten Chargen offenbart. Allerdings erfolgt das Auslesen der Fehlerdaten nicht anhand einer auf dem Glasrohr-Halbzeug aufgebrachten Markierung.

### ZUSAMMENFASSUNG DER ERFINDUNG

Aufgabe der vorliegenden Erfindung ist es, ein verbessertes Verfahren zur Weiterverarbeitung von Glasrohr-Halbzeugen bereitzustellen, womit sich in einfacher und kostengünstiger Weise zuverlässig Endprodukte aus Glas, insbesondere Hohlglasprodukte, herstellen lassen, die insbesondere höheren Qualitätsanforderungen gerecht werden, insbesondere enger toleriert sein können.

Diese Aufgabe wird durch ein Verfahren zur Weiterverarbeitung von Glasrohr-Halbzeugen nach Anspruch 1 gelöst. Weitere vorteilhafte Ausführungsformen sind Gegenstand der rückbezogenen Unteransprüche.

Gemäß einem ersten Gesichtspunkt der vorliegenden Erfindung wird ein Verfahren zum Weiterverarbeiten eines Glasrohr-Halbzeugs bereitgestellt, mit den Schritten: Bereitstellen des Glasrohr-Halbzeugs, wobei für das Glasrohr-Halbzeug Fehlerdaten bereitgestellt werden und das Glasrohr-Halbzeug mit zumindest einer Markierung gekennzeichnet ist; Auslesen der Fehlerdaten für das Glasrohr-Halbzeug anhand der zumindest einen Markierung, mit der das Glasrohr-Halbzeug gekennzeichnet ist; und Weiterverarbeiten des Glasrohr-Halbzeugs, wobei das Weiterverarbeiten des Glasrohr-Halbzeugs insbesondere auch eine zumindest abschnittsweise durchgeführte thermische Umformung umfassen kann, beispielsweise zu einem Hohlglasprodukt oder Glasbehälter; wobei die Weiterverarbeitung des Glasrohr-Halbzeugs an die Fehlerdaten, die für das Glasrohr-Halbzeug ausgelesen wurden, unter der Kontrolle einer elektronischen Steuereinrichtung angepasst wird, wobei die Fehlerdaten Information zur Qualität des jeweiligen Glasrohr-Halbzeugs betreffen, die bei der Rohrherstellung ermittelt werden, und die Fehlerdaten weiterhin Information zu Ort und Lage und bevorzugt auch zur Größe der Fehler des Glasrohr-Halbzeugs beinhalten.

Wenn beispielsweise die Fehlerdaten eines weiter zu verarbeitenden Glasrohr-Halbzeugs eine vergleichsweise hohe Dichte von Fehlern anzeigen, beispielsweise von Rissen oder Einschlüssen im Material des Glasrohr-Halbzeugs, so können die Prozessparameter bei der Weiterverarbeitung entsprechend geändert werden, insbesondere dahingehend, dass fehlerhafte Abschnitte des Glasrohr-Halbzeugs abgelängt, aussortiert und nicht weiter verarbeitet werden, sodass erfindungsgemäß ausschließlich Endprodukte ohne solche Fehler hergestellt werden können. Entsprechendes gilt für alle möglicherweise relevanten Fehler eines Ausgangs-Glasrohrs.

Unter den Fehlerdaten seien im Sinne der vorliegenden Erfindung grundsätzlich jegliche Eigenschaften eines Glasrohr-Halbzeugs verstanden, die einen negativen Einfluss auf die Qualität eines Endprodukts haben können und die durch geeignete Einstellung bzw. Anpassung von Prozessparametern bei der Weiterverarbeitung eines Glasrohr-Halbzeugs auch beeinflusst werden können, oder die durch Veränderung oder Anpassung von Prozessparametern bei der Weiterverarbeitung eines Glasrohr-Halbzeugs zwar nicht beeinflusst werden können sondern nur durch Aussortieren oder Ablängen des jeweils der Markierung entsprechenden fehlerbehafteten Abschnitts des Glasrohr-Halbzeugs vermieden werden können. Bei den Prozessparametern bei der Weiterverarbeitung eines Glasrohr-Halbzeugs handelt es sich dabei insbesondere um die Prozessbedingungen beim Abtrennen von Unterabschnitten von einem Glasrohr-Halbzeug, wie beispielsweise Ort und Größe eines abgetrennten Bereichs des Glasrohr-Halbzeugs, oder um die Prozessbedingungen bei der Weiterverarbeitung eines von dem jeweiligen Glasrohr-Halbzeug abgetrennten Unterabschnitts, wie beispielsweise Ort der Weiterverarbeitung an dem abgetrennten Bereich des Glasrohr-Halbzeugs oder dergleichen.

Gemäß einer bevorzugten weiteren Ausführungsform umfasst die Anpassung der Weiterverarbeitung des Glasrohr-Halbzeugs keine Steuerung oder Regelung eines Prozessparameters, der eine zumindest abschnittsweise durchgeführte thermische Umformung des Glasrohr-Halbzeugs betrifft, also insbesondere keine Steuerung oder Regelung einer Temperatur, Brennerleistung, Abstand des/der Brenner(s) vom Glasrohr-Halbzeug zur thermischen Umformung, Orientierung bzw. Ausrichtung des jeweiligen Brenners, Prozesszeiten der thermischen Umformung, Prozesstaktung thermischen Umformung oder dergleichen, sowie insbesondere keine Prozessbedingungen bei der Weiterverarbeitung eines von dem jeweiligen Glasrohr-Halbzeug abgetrennten Unterabschnitts durch thermische Umformung, wie beispielsweise Temperatur der thermischen Umformung, Brennerleistung, Abstand des/der Brenner(s) vom jeweils abgetrennten Unterabschnitt während der thermischen Umformung, Orientierung bzw. Ausrichtung des jeweiligen Brenners während der thermischen Umformung, Prozesszeiten der thermischen Umformung, Prozesstaktung der thermischen Umformung, Prozessparameter bei der thermischen Umformung des abgetrennten Unterabschnitts, wie beispielsweise Anlegen eines Über- oder Unterdrucks, (abschnittsweises) Einpressen des abgetrennten Unterabschnitts in eine Form oder dergleichen, thermische Bedingungen beim Abkühlen, oder dergleichen.

Unter einer Anpassung der Weiterverarbeitung des Glasrohr-Halbzeugs kann im einfachsten Fall eine Einstellung von Prozessparametern entsprechend einer Nachschlagetabelle verstanden sein, in welcher in Zuordnung zu den relevanten Eigenschaften eines Glasrohr-Halbzeugs oder (abgetrennten) Unterabschnitts hiervon zugeordnete Prozessparameter hinterlegt sind, wie beispielsweise Schnittparameter beim Ablängen von Unterabschnitten vom Glasrohr-Halbzeug zur Weiterverarbeitung. Eine solche Nachschlagetabelle kann insbesondere in einer Datenbank oder auf einem Datenträger hinterlegt sein, worauf eine Steuerungseinrichtung, beispielsweise ein Prozessor, einer Weiterverarbeitungsanlage Zugriff hat. Die Daten einer solchen Nachschlagetabelle können im einfachsten Falle auf Erfahrungsdaten beruhen, können jedoch auch das Ergebnis von Berechnungen oder numerischen Simulationen oder von entsprechenden Versuchsreihen sein, also wissensbasiert sein.

Die Anpassung der Weiterverarbeitung des Glasrohr-Halbzeugs kann selbstverständlich auch entsprechend mathematischen Formeln oder Berechnungen erfolgen, in welche die bereitgestellten Fehlerdaten eingehen.

Die "Bereitstellung der Fehlerdaten" im Sinne der vorliegenden Erfindung bedeutet insbesondere, dass ein weiterverarbeitender Betrieb die relevanten Eigenschaften eines jeweils zu verarbeitenden Glasrohr-Halbzeugs nicht erneut aufwändig ermitteln bzw. messen muss, sondern dass diese Daten dem weiterverarbeitenden Betrieb erfindungsgemäß vom Glasrohr-Hersteller in geeigneter Weise mittelbar oder unmittelbar zur Verfügung gestellt werden, was Aufwand und Kosten bei der Weiterverarbeitung von Glasrohren zu reduzieren hilft. Hierzu kann ein entsprechender Zugriff des weiterverarbeitenden Betriebs auf Daten des Herstellers des Glasrohrs vorgesehen sein, beispielsweise durch Zugriff auf eine von dem Hersteller betriebene Datenbank oder auf einen von dem Hersteller zur Verfügung gestellten Datenträger. Grundsätzlich können die Daten auch unmittelbar auf dem Glasrohr hinterlegt sein, beispielsweise in einer geeigneten Markierung, einem Aufkleber, einem RFID-Tag oder dergleichen. In jedem Fall kann der weiterverarbeitende Betrieb die relevanten Fehlerdaten in einfacher Weise einlesen, ohne dass diese erneut aufwändig gemessen oder anderweitig bestimmt werden müssten.

Gemäß einer weiteren Ausführungsform umfasst die Anpassung der Weiterverarbeitung des Glasrohr-Halbzeugs ein Aussortieren oder vorübergehendes Zwischenspeichern eines Glasrohr-Halbzeugs, wenn auf Grundlage der Fehlerdaten für das Glasrohr-Halbzeug ermittelt wird, dass die Weiterverarbeitung des Glasrohr-Halbzeugs mit aktuellen Prozessparametern nicht möglich ist oder nur mit einer unzureichenden Qualität möglich ist.

Gemäß einer weiteren Ausführungsform beinhalten die Fehlerdaten Fehlerinformation für die gesamte Länge des Glasrohr-Halbzeugs, insbesondere sind in der Fehlerinformation Informationen über sämtliche Fehler auf dem Glasrohr-Halbzeug enthalten, einschließlich des Fehlertyps, wie weiter unten ausgeführt.

Gemäß einer weiteren Ausführungsform werden die Fehlerdaten jeweils für Unterabschnitte des Glasrohr-Halbzeugs einer vorbestimmten Länge in einer Längsrichtung des Glasrohr-Halbzeugs bereitgestellt, was insbesondere durch eine kontinuierlich oder abschnittsweise auf dem Glasrohr-Halbzeug vorgesehene Rohrstrangmarkierung bewerkstelligt werden kann. Die Länge dieser Unterabschnitte kann insbesondere auf die Länge von herzustellenden Endprodukten abgestimmt sein, einschließlich eines möglicherweise anfallenden Verschnitts oder dergleichen. Mit anderen Worten: für jedes herzustellende Endprodukt stehen für die Weiterverarbeitung des Glasrohr-Halbzeugs beim weiterverarbeitenden Betrieb exakte Fehlerdaten zur Verfügung, auf deren Grundlage dann individuell die Weiterverarbeitung des jeweiligen des Glasrohr-Halbzeugs angepasst werden kann, einschließlich von Parametern zum Ablängen und/oder Aussortieren von fehlerbehafteten Abschnitten oder Unterabschnitten des Glasrohr-Halbzeugs.

Gemäß einer weiteren Ausführungsform wird das Glasrohr-Halbzeug weiterhin entsprechend den gemittelten Fehlerdaten in eine von mehreren Klassen klassifiziert bereitgestellt. Vorteilhaft ist, dass mehrere Glasrohr-Halbzeuge ein und derselben Klasse mit denselben Parametern weiterverarbeitet werden können, was die Weiterverarbeitung effektiver, zeitsparender, kostengünstiger und zuverlässiger macht.

Gemäß einer weiteren Ausführungsform enthalten die Fehlerdaten, die Information zur Qualität des jeweiligen Glasrohr-Halbzeugs betreffen, insbesondere zumindest eine der folgenden Informationen zu Fehlern des Glasrohr-Halbzeugs: Einschlüsse in einer Wand des Glasrohr-Halbzeugs, einschließlich von Blasen, Knoten, kristallinen Bereichen und dergleichen; mechanische Beschädigungen auf der Oberfläche oder im Volumen des Glasrohr-Halbzeugs, einschließlich von Kratzern, Materialabrieb; von Inhomogenitäten auf der Oberfläche oder im Volumen des Glasrohr-Halbzeugs, einschließlich von Bereichen einer anderen optischen Brechkraft und optischer Schlieren; Fehlertyp. Insbesondere kann eine Fehlerkarte zu einem jeweiligen Glasrohr-Halbzeug bereitgestellt werden, anhand der die Weiterverarbeitung des Glasrohr-Halbzeugs, oder von Unterabschnitten davon, geeignet angepasst wird, einschließlich eines Ablängens und möglicherweise Aussortierens von fehlerbehafteten Unterabschnitten.

Gemäß einer weiteren Ausführungsform beinhalten die Fehlerdaten weiterhin ortsaufgelöste Information in Umfangsrichtung des Glasrohr-Halbzeugs zu Ort und Lage und bevorzugt auch zur Größe der Fehler des Glasrohr-Halbzeugs. Die vorgenannte Fehlerkarte zu einem jeweiligen Glasrohr-Halbzeug ist somit nicht nur in Längsrichtung des Glasrohr-Halbzeugs bekannt, sondern auch in Umfangsrichtung, was die Fertigung von höherwertigen Endprodukten mit homogeneren Eigenschaften auch in Umfangsrichtung des Endprodukts ermöglicht.

Gemäß einer weiteren Ausführungsform ist das Glasrohr-Halbzeug mit zumindest einer Markierung gekennzeichnet, anhand bzw. aus der die Fehlerdaten für das Glasrohr-Halbzeug (mittelbar bzw. unmittelbar) ausgelesen werden können. So kann die zumindest eine Markierung insbesondere eine Rohr-Identifizierungsinformation enthalten, anhand der die Fehlerdaten für das Glasrohr-Halbzeug aus einem Datenspeicher oder einer Datenbank ausgelesen werden können, jeweils in Zuordnung zu einem Glasrohr-Halbzeug oder einem Unterabschnitt davon, das bzw. der durch die jeweilige Rohr-Identifizierungsinformation identifiziert ist. Die Bereitstellung der Fehlerdaten erfolgt somit mittelbar, nämlich über den Datenspeicher, die Datenbank oder dergleichen, was einfach und kostengünstig in die Prozesse eines weiterverarbeitenden Betriebs integriert werden kann.

Die Fehlerdaten für das Glasrohr-Halbzeug können jedoch auch in weiteren Markierungen auf dem Glasrohr-Halbzeug oder in zumindest einem weiteren Markierungsabschnitt der zumindest einen Markierung auf dem Glasrohr-Halbzeug enthalten sein. Die Bereitstellung der Fehlerdaten kann somit unmittelbar erfolgen, also mittels der in die weitere Markierung bzw. in den weiteren Markierungsabschnitt eingeschriebenen Information zu dem jeweiligen Glasrohr-Halbzeug bzw. zu einem jeweiligen Unterabschnitt hiervon.

Gemäß einer weiteren Ausführungsform kann die zumindest eine Markierung mittels eines der folgenden Verfahren auf das jeweilige Glasrohr-Halbzeug aufgebracht werden: Direktmarkieren eines Fehlers durch mechanisches Einkerben, Einkerbung durch Laserbehandlung, Einbrennen eines Pigmentfarbstoffs mit einem Laser, Tintenstrahldruck, Lasermarkieren; Aufbringen, insbesondere Aufdrucken, eines Balkencodes, einer Strichmarkierung oder Matrixcode-Markierung oder dergleichen, welche die Fehlerdaten oder einen Datenlink auf diese codiert; Aufkleben eines Aufklebers, welcher die Fehlerdaten oder einen Datenlink auf diese codiert; Anbringen eines RFID-Tags an dem Glasrohr-Halbzeug, welcher die Fehlerdaten oder einen Datenlink auf diese codiert.

Gemäß einer alternativen Ausführungsform kann die zumindest eine Markierung durch Wechselwirken eines Laserstrahls mit dem Glas des Glasrohr-Halbzeugs erzeugt werden. Grundsätzlich kann die Laserbeschriftung bei Temperaturen unterhalb der Transformationstemperatur erzeugt werden. Das gilt insbesondere für Beschriftungen, die auf dem Endprodukt nicht mehr vorhanden sind. In diesem Fall muss die Laserbeschriftung z.B. bezüglich Bruchfestigkeit nicht die Anforderungen erfüllen, die an das Endprodukt gestellt werden.

Gemäß einer weiteren Ausführungsform kann die zumindest eine Markierung durch Wechselwirken eines Laserstrahls mit dem Glas des Glasrohr-Halbzeugs bei Temperaturen oberhalb der Transformationstemperatur des Glases in eine Wand des Glasrohr-Halbzeugs eingebracht sein, insbesondere als digitaler Matrix-Code (DMC). Vorteilhaft ist, dass diese Information nachträglich praktisch nicht mehr verfälscht werden kann, und dass derartige Markierungen in einfacher und kostengünstiger Weise ausgelesen werden können, insbesondere optisch und berührungsfrei, was sich einfach in die Prozesse integrieren lässt, die bei einem weiterverarbeitenden Betrieb üblicherweise ausgeführt werden.

Gemäß einer weiteren Ausführungsform wird zum Ausführen des Verfahrens, insbesondere zu Beginn bei einem weiterverarbeitenden Betrieb, beispielsweise bei einer Wareneingangskontrolle, stichprobenweise zumindest ein Glasrohr-Halbzeug vor dem Weiterverarbeiten ausgemessen und bewertet. Die so gemessenen Größen und Bewertungsdaten werden mit den für das jeweilige Glasrohr-Halbzeug bereitgestellten Fehlerdaten verglichen, um eine Abweichungsinformation zu ermitteln, wobei der zumindest eine Prozessparameter, der zum Anpassen der Weiterverarbeitung einer Mehrzahl von Glasrohr-Halbzeugen verwendet wird, an die Fehlerdaten, die für die jeweiligen Glasrohr-Halbzeuge ausgelesen wurden, unter Berücksichtigung der ermittelten Abweichungsinformation angepasst wird. Insbesondere können so durch stichprobenweise Ausmessung von Glasrohren etwaige systematische Abweichungen zwischen den bereitgestellten Fehlerdaten und den tatsächlichen Fehlerdaten zuverlässig bestimmt und anschließend korrigiert werden. Auf diese Weise lassen sich beispielsweise systematische Messfehler oder dergleichen auf der Seite eines weiterverarbeitenden Betriebs in einfacher Weise zuverlässig korrigieren und vermeiden.

Gemäß einer weiteren Ausführungsform umfasst das Weiterverarbeiten des Glasrohr-Halbzeugs weiterhin auch ein lokales Erwärmen eines Abschnittes des Glasrohr-Halbzeugs und ein Abtrennen eines Behälters durch Abtrennen eines Abschnittes von dem Glasrohr-Halbzeug im Bereich des lokal erwärmten Abschnittes unter Ausbildung eines Bodens des Behälters. Der Boden kann dabei insbesondere durch Zusammensacken und Verschmelzen von noch hinreichend plastischen Wandabschnitten ausgebildet werden, was längliche Endprodukte bzw. Hohlglasprodukte mit zumindest einem geschlossenen Ende ergibt. Anhand der Fehlerdaten können dabei insbesondere Prozessparameter gesteuert oder geeignet eingestellt werden, die das lokale Erwärmen des Abschnittes des Glasrohr-Halbzeugs und das Abtrennen des Behälters beeinflussen, insbesondere Brennerleistungen und eine axiale Verstellung von Halteabschnitten einer Weiterverarbeitungsanlage, die zum (auch vorübergehenden) Halten von Abschnitten des Glasrohr-Halbzeugs dienen. Die zur thermischen Umformung verwendeten Prozessparameter werden jedoch im Sinne der vorliegenden Erfindung nicht in Abhängigkeit von den Fehlerdaten, die für das jeweilige Glasrohr-Halbzeug ausgelesen wurden, gesteuert oder geregelt.

Gemäß einer weiteren Ausführungsform wird beim Abtrennen des Behälters von dem Glasrohr-Halbzeug weiterhin ein Hals bzw. verengter Halsabschnitt des Behälters vorgeformt, wobei der Behälter von einer Haltevorrichtung kopfüber aufgenommen wird und sich der Boden des Behälters allmählich von dem Glasrohr-Halbzeug durch Zusammensacken einer Wand des Glasrohrs ausbildet.

Gemäß einer weiteren Ausführungsform ist weiterhin eine weitere Bearbeitung des Bodens des Behälters vorgesehen, mit zumindest einem der folgenden Schritte: Bearbeiten des Bodens des Behälters mit mindestens einem Brenner, um den Boden grob zu formen; weitere Bearbeitung des Bodens mit mindestens einem Brenner, um den Boden flach zu formen; Pressen des Bodens in eine Formmatrix unter Aufwenden eines Gasdrucks, insbesondere im Bereich 0,5 bis 3,0 bar, um den Boden final zu formen; Abkühlen des Bodens. Anhand der Fehlerdaten können dabei insbesondere Prozessparameter gesteuert oder geeignet eingestellt werden, die einen oder mehrere dieser weiteren Verfahrensschritte betreffen.

Gemäß einer weiteren Ausführungsform umfasst das Weiterverarbeiten des Glasrohr-Halbzeugs weiterhin ein Aussortieren oder vorübergehendes Zwischenspeichern eines Glasrohr-Halbzeugs, wenn auf Grundlage der Fehlerdaten für das Glasrohr-Halbzeug ermittelt wird, dass das Weiterverarbeiten des Glasrohr-Halbzeugs mit aktuellen Prozessparametern nicht möglich ist. Auf diese Weise können insbesondere Klassen von Glasrohr-Halbzeugen mit jeweils gleichen oder vergleichbaren relevanten Eigenschaften gebildet werden, wobei dann ganze Klassen solcher Glasrohr-Halbzeuge (oder von davon abgetrennten und zwischengespeicherten Unterabschnitten von diesen) gebildet werden können und diese Klassen dann bei der Weiterverarbeitung zum Endprodukt mit identischen oder mit im Wesentlichen gleichen Prozessparametern weiterverarbeitet werden können. Vorteilhaft ist, dass die relevanten Prozessparameter dann nicht so häufig verändert werden müssen, was weitere Vorteile bei der Weiterverarbeitung ermöglicht. Nach dem vorübergehenden Zwischenspeichern kann eine neue Klasse dann insbesondere mit einmalig geänderten bzw. angepassten Prozessparametern, die auf Grundlage der Fehlerdaten für das Glasrohr-Halbzeug ermittelt werden, weiterverarbeitet werden.

Gemäß einer weiteren Ausführungsform ist das Endprodukt nach der Weiterverarbeitung ein Behälter zur Aufnahme von pharmazeutischen, medizinischen oder kosmetischen Substanzen, insbesondere ein Vial, eine Karpule oder ein Spritzenkörper. Allgemeiner ist das Endprodukt ein Hohlglasprodukt der vorgenannten Art, das zweckmäßig zumindest eine Öffnung zum Einfüllen einer Substanz aufweist.

### FIGURENÜBERSICHT

Nachfolgend wird die Erfindung in beispielhafter Weise und unter Bezugnahme auf die beigefügten Zeichnungen beschrieben, woraus sich weitere Merkmale, Vorteile und zu lösende Aufgaben ergeben werden. Es zeigen:
- Fig. 1a: ein erstes Ausführungsbeispiel für ein Glasrohr-Halbzeug gemäß der vorliegenden Erfindung mit daran vorgesehenen Markierungen, die Fehlerdaten codieren;
- Fig. 1b: ein zweites Ausführungsbeispiel für ein Glasrohr-Halbzeug gemäß der vorliegenden Erfindung mit einer vergrößerten Darstellung einer daran vorgesehenen Markierung, die Fehlerdaten codiert;
- Fig. 1c: ein drittes Ausführungsbeispiel für ein Glasrohr-Halbzeug gemäß der vorliegenden Erfindung mit einer daran vorgesehenen Markierung, die Fehlerdaten mittelbar codiert;
- Fig. 2a: in einem schematischen Diagramm eine Vorrichtung zum Kennzeichnen eines Glasrohr-Halbzeugs mit rohrspezifischen Daten und eine Anlage zum Weiterverarbeiten eines Glasrohr-Halbzeugs, um ein Verfahren gemäß der vorliegenden Erfindung auszuführen;
- Fig. 2b: eine Datenbank, die Fehlerdaten für eine Mehrzahl von Glasrohr-Halbzeugen speichert;
- Fig. 3a: ein schematisches Flussdiagramm eines ersten Ausführungsbeispiels eines Verfahrens zum Weiterverarbeiten eines Glasrohr-Halbzeugs gemäß der vorliegenden Erfindung zur Herstellung eines Endprodukts;
- Fig. 3b: ein schematisches Flussdiagramm eines zweiten Ausführungsbeispiels eines Verfahrens zum Weiterverarbeiten eines Glasrohr-Halbzeugs gemäß der vorliegenden Erfindung zur Herstellung eines Endprodukts;
- Fig. 4: drei weitere Ausführungsbeispiele für ein Verfahren zum Weiterverarbeiten eines Glasrohr-Halbzeugs gemäß der vorliegenden Erfindung zur Herstellung eines Endprodukts; und
- Fig. 5a-5e: weitere Ausführungsbeispiele für ein Verfahren zum Weiterverarbeiten eines Glasrohr-Halbzeugs gemäß der vorliegenden Erfindung zur Herstellung eines Endprodukts.

In den Figuren bezeichnen identische Bezugszeichen identische oder im Wesentlichen gleichwirkende Elemente oder Gruppen von Elementen.

### AUSFÜHRLICHE BESCHREIBUNG VON AUSFÜHRUNGSBEISPIELEN

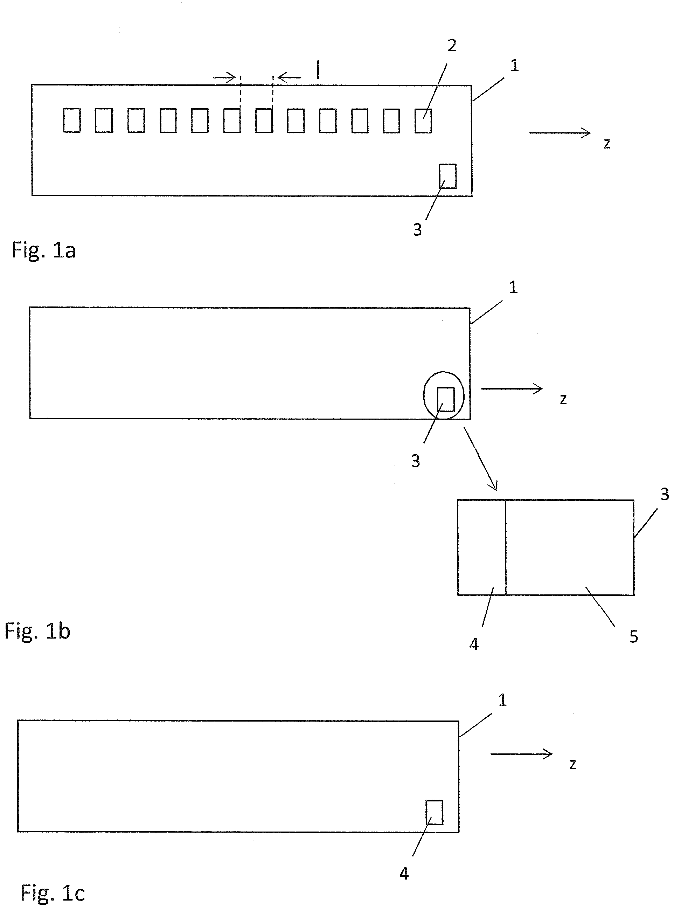

Fig. 1a zeigt ein erstes Ausführungsbeispiel für ein Glasrohr-Halbzeug gemäß der vorliegenden Erfindung mit daran vorgesehenen Markierungen. Unter einem Glasrohr-Halbzeug im Sinne der vorliegenden Erfindung sei insbesondere ein vorgefertigtes Glasrohr mit vorbestimmten Dimensionen und Eigenschaften verstanden, das als Ausgangs-Werkstück für eine Weiterverarbeitung zu Endprodukten aus Glas, insbesondere zu Hohlglasprodukten, dient. Solche Glasrohr-Halbzeuge werden üblicherweise in vorbestimmten Längen von beispielsweise 1,5 m ausgeliefert, wobei ein Rohrende oder bevorzugt beide Rohrenden bei der Auslieferung an einen weiterverarbeitenden Betrieb verschlossen sind, um ein unerwünschtes Eindringen von Verunreinigungen in das Innere des Glasrohr-Halbzeugs zu verhindern. Hierzu kann das zumindest eine Ende des Glasrohr-Halbzeugs 1 auch durch thermische Umformung vollständig verschlossen sein.

Bei der Herstellung des Glasrohr-Halbzeugs 1 wird auf das Glasrohr 1 fortwährend eine Rohrstrangmarkierung 2 aufgebracht, die jeweils Fehlerdaten für einen jeweiligen Unterabschnitt einer Länge 1 des Glasrohr-Halbzeugs 1 enthält, wie nachfolgend ausgeführt. An dem Glasrohr-Halbzeug 1 ist weiterhin eine zweite Markierung 3 getrennt von der Rohrstrangmarkierung 2 vorgesehen, die eine Rohr-Identifizierungsinformation zur Identifizierung des Glasrohr-Halbzeugs 1 enthält, bevorzugt eine Rohr-ID, Rohr-Seriennummer oder dergleichen. Weiterhin können in der zweiten Markierung auch Angaben zu Hersteller, Produktionsort und/oder Produktionsanlage des Glasrohrs 1 angezeigt werden. Die Rohrstrangmarkierung kann grundsätzlich bis zum Endprodukt (beispielsweise Pharmabehälter) unverändert erhalten bleiben. Die Informationen zu dem Glasrohr-Halbzeug 1 sind in den Markierungen 2, 3 bevorzugt nicht in Klarschrift enthalten, sondern erst entsprechend einer vorbestimmten Rechen- oder Decodierungsanweisung auslesbar.

Gemäß der Fig. 1a sind die Rohrstrangmarkierungen 2 in der Längsrichtung (z) des Glasrohrs bevorzugt unter vorbestimmten, konstanten Abständen (1) zueinander auf dem Glasrohr 1 angebracht. Diese Abstände 1 können beispielsweise abgestimmt sein auf die zu erwartenden Längen derjenigen Abschnitte, aus denen später die Endprodukte (beispielsweise Pharmabehälter) hergestellt werden sollen und die hierzu von einem Original-Glasrohr-Halbzeug abgelängt werden müssen, einschließlich etwaigen Verschnitts und abzutrennender Abschnitte.

Die Fig. 1b zeigt ein zweites Ausführungsbeispiel für ein Glasrohr-Halbzeug gemäß der vorliegenden Erfindung mit einer vergrößerten Darstellung einer daran vorgesehenen Markierung. Gemäß der Fig. 1b ist statt der räumlich getrennt aufgebrachten ersten und zweiten Markierung auf dem Glasrohr-Halbzeug 1 an einer vorbestimmten Stelle, beispielsweise an einem vorderen oder hinteren Ende des Glasrohr-Halbzeugs 1, eine Kombinations-Markierung 3 vorgesehen, die zumindest eine erste und eine zweite Information 4, 5 enthält, die bevorzugt in unmittelbarer Nähe zueinander angeordnet sind. Während die erste Information 4 eine Rohr-Identifizierungsinformation beinhaltet, codiert die zweite Information 5 Fehlerdaten für das jeweilige Glasrohr-Halbzeug 1, wenn erwünscht auch für die einzelnen Unterabschnitte in Längsrichtung des Glasrohr-Halbzeugs 1 (vgl. Fig. 1a), wie nachfolgend ausgeführt. Oder die zweite Information 5 codiert einen Datenlink auf diese Fehlerdaten, sodass diese mittelbar z.B. aus einer Datenbank unter Verwendung dieses Datenlinks ausgelesen werden können.

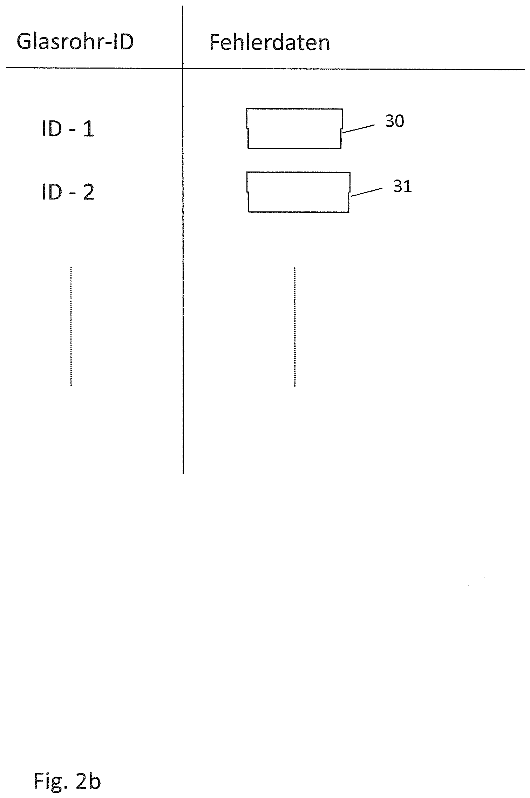

Die Fig. 1c zeigt ein drittes Ausführungsbeispiel für ein Glasrohr-Halbzeug gemäß der vorliegenden Erfindung mit einer daran vorgesehenen Markierung, die Fehlerdaten mittelbar codiert. Hierzu codiert die Markierung 4 eine Rohr-Identifizierungsinformation, die ein Glasrohr-Halbzeug 1 eineindeutig kennzeichnet, einschließlich sämtlicher notwendiger Angaben, um das erfindungsgemäße Verfahren auszuführen, wie nachfolgend ausgeführt. Hierzu kann es ausreichend sein, wenn anhand einer in der Markierung 4 codierten Rohr-Identifizierungsinformation oder anhand eines von der Markierung 4 codierten Datenlinks die relevanten Fehlerdaten mittelbar aus einer Datenbank ausgelesen werden können, wie nachfolgend anhand der Fig. 2b ausführlicher beschrieben.

Bei den vorgenannten Ausführungsbeispielen ist die Fehlerinformation mittelbar auf dem Glasrohr-Halbzeug markiert, was insbesondere durch eines der folgenden Verfahren erzielt werden kann:
- Aufbringen einer Markierung am Rand des Glasrohr-Halbzeugs, sodass die Weiterverarbeitung des Glasrohr-Halbzeugs nicht gestört ist, insbesondere durch Lasermarkieren, Einbrennen eines Pigmentfarbstoffes mit Laser, Tintenstrahldruck;

Die Fehlerinformation kann gemäß weiteren Ausführungsbeispielen auch unmittelbar markiert werden, insbesondere durch eines der folgenden Verfahren:
- Direktmarkierung des Fehlers (größere Markierung direkt an Fehlerposition erleichtert Detektion) durch: mechanisches Einkerben in Glasoberfläche (Ritzwerkzeug), Einkerbung durch Laserbehandlung, Einbrennen eines Pigmentfarbstoffes mit Laser oder Tintenstrahldruck;
- Codierung (Fehlerpositionen od. Rohrnummern) am Rohrende.

Gemäß weiteren Ausführungsbeispielen kann die Fehlerinformation auch mittels Direktmarkierung und zusätzlicher Codierung am Rohrende markiert werden, also durch Kombination der beiden vorgenannten Verfahren, insbesondere durch Direktmarkierung mit in die Markierung modulierter Fehlerinformation, beispielsweise durch Einkerbung durch Laserbehandlung, Einbrennen eines Pigmentfarbstoffes mit Laser, Tintenstrahldruck oder dergleichen.

Im Sinne der vorliegenden Erfindung betreffen die Fehlerdaten Information zur Qualität des Glasrohr-Halbzeugs, insbesondere zumindest eine der folgenden Informationen für das Glasrohr-Halbzeug: Einschlüsse in einer Wand des Glasrohr-Halbzeugs, einschließlich von Blasen, Knoten, kristallinen Bereichen und dergleichen; mechanische Beschädigungen auf der Oberfläche oder im Volumen des Glasrohr-Halbzeugs, einschließlich von Kratzern, Materialabrieb; Inhomogenitäten auf der Oberfläche oder im Volumen des Glasrohr-Halbzeugs, einschließlich von Bereichen einer anderen optischen Brechkraft und optischer Schlieren; Fehlertyp. Dabei beinhalten die Fehlerdaten weiterhin Information zu Ort und Lage und bevorzugt auch zur Größe der Fehler des Glasrohr-Halbzeugs.

Im Sinne der vorliegenden Erfindung werden diese Fehlerdaten dazu verwendet, um eine Weiterverarbeitung des Glasrohr-Halbzeugs an die Fehlerdaten für das jeweilige Glasrohr-Halbzeug anzupassen, wie nachfolgend ausführlicher dargelegt. Diese Anpassung kann insbesondere die Bedingungen und Vorgehensweise zum Ablängen und/oder Aussortieren von fehlerbehafteten Glasrohr-Halbzeugen oder fehlerbehafteten Abschnitten eines Glasrohr-Halbzeugs beinhalten. Dabei kann die Weiterverarbeitung des Glasrohr-Halbzeugs ergänzend auch eine abschnittsweise durchgeführte thermische Umformung umfassen, die durch zumindest einen Prozessparameter gesteuert oder geregelt wird. Dieser mindestens eine Prozessparameter, der eine solche thermische Umformung steuert oder regelt, wird jedoch nicht im Sinne der vorliegenden Erfindung durch die Fehlerdaten für das jeweilige Glasrohr-Halbzeug gesteuert oder geregelt.

Abhängig vom Zeitpunkt des Aufbringens der Markierungen 3-5 ist auch das zum Markieren eingesetzte Verfahren gewählt. So kann es ausreichend sein, wenn die Markierungen 3-5 bei Temperaturen unterhalb einer Transformationstemperatur des Glases aufgebracht werden, beispielsweise mittels einer Lasermarkierung, durch Aufdrucken einer Markierung, beispielsweise eines Balkencodes oder einer Strich- oder Matrixcode-Markierung, welche die Fehlerdaten oder einen Datenlink auf diese codiert. Die Fehlerdaten oder ein Datenlink auf diese können auch in einem Aufkleber codiert sein, der an geeigneter Stelle auf das Glasrohr-Halbzeug 1 aufgeklebt wird und nach einem Auslesen der relevanten Informationen vor der Weiterverarbeitung des Glasrohr-Halbzeugs 1 wieder entfernt wird. Oder die Fehlerdaten oder ein Datenlink auf diese können in einem RFID-Tag codiert sein, der an geeigneter Stelle auf dem Glasrohr-Halbzeug 1 vorgesehen ist und nach einem berührungslosen Auslesen der relevanten Informationen mittels rf-Signalen vor der Weiterverarbeitung wieder entfernt wird.

Die Markierungen 3-5 oder Teile hiervon können jedoch auch bei Temperaturen oberhalb der Transformationstemperatur des Glases erzeugt werden, bevorzugt in Gestalt eines digitalen Matrix-Codes (DMC) mittels eines Verfahrens, wie in US 2003 0029849 A1, DE 102 34 002 A1 und WO 2012 028611 A1 der Anmelderin offenbart, deren Inhalt hiermit im Wege der Bezugnahme ausdrücklich mit aufgenommen sei. Die vorgenannten Daten, insbesondere Fehlerdaten, können dabei in Klarschrift (unverschlüsselt) oder mittels einer vorbestimmten Codierung aufgebracht werden.

Während die Rohrstrangmarkierung 2 grundsätzlich bis zum Endprodukt bzw. Hohlglasprodukt (beispielsweise Pharmabehälter) unverändert erhalten bleiben kann, werden die vorgenannten weiteren Markierungen bei der Weiterverarbeitung des Glasrohr-Halbzeugs 1 zu dem Endprodukt bei einem weiterverarbeitenden Betrieb wieder entfernt, wobei ggf. beim weiterverarbeitenden Betrieb gemäß einer vorbestimmten Rechen- oder Codierungsvorschrift und unter Beibehaltung des Informationsgehalts der weiteren Markierungen eine neue Markierung aufgebracht wird, die zur weiteren Auswertung verwendet werden kann.

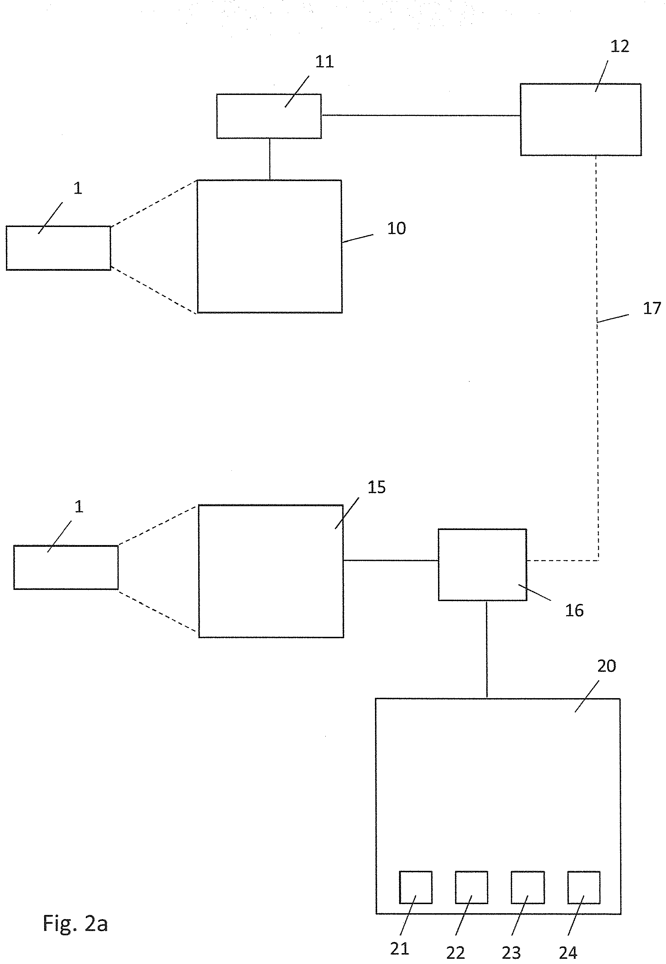

Die Fig. 2a zeigt in einem schematischen Diagramm eine Vorrichtung zum Kennzeichnen eines Glasrohr-Halbzeugs mit Fehlerdaten und eine Anlage zum Weiterverarbeiten eines Glasrohr-Halbzeugs, um ein Verfahren gemäß der vorliegenden Erfindung auszuführen. Dabei kann die Weiterverarbeitung des Glasrohr-Halbzeugs weiterhin auch eine zumindest abschnittsweise durchgeführte thermische Umformung beinhalten.

Im oberen Bildteil der Fig. 2a ist eine Vorrichtung zum Aufbringen einer Markierung auf dem Glasrohr-Halbzeug dargestellt, einschließlich von Fehlerdaten, einer Rohr-Identifizierungsinformation und weiteren Informationen. Dabei sei zugrunde gelegt, dass die Markierung mittels eines digitalen Matrix-Codes (DMC) und mittels eines Verfahrens, wie in US 2003 0029849 A1, DE 102 34 002 A1 und WO 2012 028611 A1 der Anmelderin offenbart, auf dem Glasrohr-Halbzeug aufgebracht wird. Hier werden zunächst Fehlerdaten, wie vorstehend ausgeführt, für das Glasrohr-Halbzeug 1 mittels einer Messeinrichtung 10 ermittelt. Dabei können die Fehlerdaten auch für eine Mehrzahl von Unterabschnitten ermittelt werden, die entlang der Längsrichtung des Glasrohr-Halbzeugs beabstandet zueinander angeordnet sind, vorzugsweise unter konstanten Abständen zueinander, wie in der Fig. 1a gezeigt. Nach Erfassung der Fehlerdaten werden diese entweder in einer externen Datenbank 12 gespeichert oder zum Beispiel auf einem Datenträger, wie beispielsweise einer Daten-CD, abgelegt. Dies erfolgt dabei stets in Zuordnung zu Information, die eine eineindeutige Identifizierung des jeweiligen Glasrohr-Halbzeugs erlaubt, insbesondere einer Seriennummer des Glasrohr-Halbzeugs oder einer Rohr-Identifizierungsinformation (nachfolgend auch als Rohr-ID bezeichnet). Die Fehlerdaten können so zu einem späteren Zeitpunkt mittelbar wieder abgefragt und ausgelesen werden.

Alternativ oder ergänzend können die Fehlerdaten oder zumindest wesentliche Teile davon, die zur Anpassung der späteren Weiterverarbeitung an die Fehlerdaten des Glasrohr-Halbzeugs 1 verwendet werden, auch mittels einer Markierungseinrichtung, die auch Teil der Messeinrichtung 10 sein kann, unmittelbar auf dem jeweiligen Glasrohr-Halbzeug 1 aufgebracht werden, beispielsweise mittels Markierungen, wie vorstehend anhand der Figuren 1a-1c beschrieben. Insbesondere kann die Markierung mit den Fehlerdaten mittels eines digitalen Matrix-Codes (DMC) und mittels eines Verfahrens, wie in US 2003 0029849 A1, DE 102 34 002 A1 und WO 2012 028611 A1 der Anmelderin offenbart, auf dem Glasrohr-Halbzeug aufgebracht werden. Die Fehlerdaten können allerdings auch in anderer Weise auf dem Glasrohr-Halbzeug aufgebracht werden, insbesondere mittels eines sog. RFID-Tags.

Gemäß der Fig. 2a erfolgt die Messung bzw. Ermittlung der Fehlerdaten und/oder die Markierung des Glasrohr-Halbzeugs 1 unter der zentralen Steuerung einer Steuerungseinrichtung 11, die auch mit der Datenbank 12 verbunden sein kann, um Daten in diese einzuschreiben und/oder aus dieser auszulesen.

Im unteren Bildteil der Fig. 2a ist schematisch eine Vorrichtung 20 zur Weiterarbeitung von Glasrohr-Halbzeugen dargestellt. Diese Vorrichtung wird typischerweise von einem weiterverarbeitenden Betrieb betrieben, der Glasrohr-Halbzeuge 1 einkauft und diese zu Endprodukten, insbesondere Hohlglasprodukten, weiterverarbeitet, insbesondere zu Glasbehältern, beispielswiese zu Glasbehältern zur Aufbewahrung von Substanzen für pharmazeutische, medizinische oder auch kosmetische Zwecke. Die Vorrichtung 20 wird von einer Steuerungseinrichtung 16 betrieben, insbesondere von einem Prozessor, der mit einer Ausleseeinrichtung 15 verbunden ist, um zumindest eine Markierung von dem Glasrohr-Halbzeug 1 auszulesen, wie vorstehend anhand der Figuren 1a-1c beschrieben, anhand der die Fehlerdaten für das jeweilige Glasrohr-Halbzeug 1 mittelbar beispielsweise aus einer Datenbank 12 (über das Netzwerk 17, beispielsweise ein unternehmensinternes Computer-Netzwerk oder das Netzwerk, insbesondere über eine gesicherte Datenkommunikationsverbindung) oder von einem Datenträger ausgelesen werden. Die Ausleseeinrichtung 15 kann die Fehlerdaten für das jeweilige Glasrohr-Halbzeug 1 jedoch auch unmittelbar aus der Markierung auf dem jeweiligen Glasrohr-Halbzeug auslesen, beispielsweise durch Auslesen einer optischen Markierung auf dem jeweiligen Glasrohr-Halbzeug 1 oder durch Auslesen eines RFID-Tags. Die Fehlerdaten werden der Vorrichtung 20 über eine gemeinsame Steuerungseinrichtung 16 zur Verfügung gestellt.

Bei der Vorrichtung 20 zur Weiterverarbeitung von Glasrohr-Halbzeugen kann es sich insbesondere um eine Vorrichtung zum Ablängen von Unterabschnitten von den Glasrohr-Halbzeugen handeln, die dann zu Endprodukten, wie beispielsweise den vorgenannten Hohlglasprodukten, weiterverarbeitet werden. Bei der Vorrichtung 20 zur Weiterverarbeitung von Glasrohr-Halbzeugen kann es sich auch um eine Vorrichtung zum Aussortieren und/oder Zwischenspeichern von Glasrohr-Halbzeugen mit einer unzureichenden Qualität handeln, die dann entweder vollständig aussortiert werden, also nicht zu einem Endprodukt weiterverarbeitet werden, oder die, nachdem mit aktuellen Parametern eine Weiterverarbeitung von Glasrohr-Halbzeugen mit ausreichender Qualität durchgeführt wurde, mit dann geänderten bzw. an die ausgelesenen Fehlerdaten angepassten Parametern weiterverarbeitet werden. Denkbar ist beispielsweise, dass der Ort des Ablängens oder der Ort der späteren Weiterverarbeitung in Anpassung an die jeweils für ein Glasrohr-Halbzeug oder einen Unterabschnitt davon ausgelesenen Fehlerdaten angepasst und verändert wird.

Die Vorrichtung 20 zur Weiterverarbeitung von Glasrohr-Halbzeugen kann zur Herstellung von Glasbehältern insbesondere auch eine aus der EP 2 818 454 A1 der Anmelderin bekannte Vorrichtung mit beinhalten, die eine Muttermaschine und eine nachgeordnete Bodenmaschine umfasst, mit einer Mehrzahl von Bearbeitungsstationen zum Ausführen von Bearbeitungsschritten, die in der Fig. 2a allgemein als Untereinheiten 21-24 bezeichnet sind, wobei deren konkrete Anzahl ausdrücklich nicht auf die nur vier dargestellten Untereinheiten 24-24 beschränkt sein soll. Zur Herstellung von Glasbehältern wird dabei zunächst ein Glasrohr an einer Halteeinheit der Muttermaschine angebracht, welches dann durch Drehen der Muttermaschine in die verschiedenen Bearbeitungspositionen gebracht wird, um vorbearbeitet zu werden. Danach wird das Glasrohr in einem Trennprozess getrennt und die dabei entstehenden Glasbehälter werden an eine Halteeinheit der nachgeordneten Bodenmaschine übergeben, um dort an verschiedenen Bearbeitungspositionen weiter bearbeitet zu werden. An den Bearbeitungspositionen der Bodenmaschine werden beispielsweise verschiedene Schritte zur geeigneten Formung des Bodens eines Glasbehälters vorgenommen. Hierbei wird, insbesondere durch verschiedene Heissformgebungsprozesse und rasche Drehung der entstehenden Glasbehälter, ein flacher Behälter-Boden erzeugt, welcher während des Prozesses wegen der vorherrschenden hohen Temperaturen eine vergleichsweise niedrige Viskosität aufweist.

Zur Herstellung von Glasfläschchen (Vials) ist beispielsweise an den verschiedenen Bearbeitungspositionen der nachgeordneten sog. Bodenmaschine eine Vielzahl von Brennern angeordnet. Sowohl die nachgeordnete Bodenmaschine als auch die stromaufwärts befindliche Muttermaschine bestehen aus einem Rotor-Anteil und einem Stator-Anteil, wobei sich die Rotor-Anteile während eines Produktionszyklus einmal um die eigene Achse drehen. Die Bearbeitungspositionen der Bodenmaschine dienen der Bodenformung der von dem Glasrohr abgetrennten Glasfläschchen und umfassen mindestens einen Trennschritt, an dem die eigentliche Trennung der Glasfläschchen von dem Glasrohr erfolgt, einen ersten Bodenformungsschritt, einen zweiten Bodenformungsschritt, einen dritten Bodenformungsschritt, einen Matrizen-Bodenformungsschritt, einen Bodenkühlungs-Schritt, einen Entnahme-Schritt und einen Leer-Schritt. In all diesen Bearbeitungsschritten werden die Glasfläschchen kopfüber gehalten. Im Einzelnen werden in den zuvor beschriebenen Bearbeitungsschritten die folgenden Bearbeitungsvorgänge getaktet nacheinander ausgeführt:
Im Trennschritt werden die entstehenden Glasfläschchen, deren Hals schon geformt ist, zunächst von einer Haltevorrichtung der Bodenmaschine kopfüber aufgenommen, um dann von dem Glasrohr abgetrennt zu werden, wobei sich der Boden allmählich beim Abtrennen der Glasfläschchen von dem Glasrohr und beim Zusammensacken der Wandung des Glasrohrs ausbildet. Im ersten Bodenformungsschritt werden die Böden der Glasfläschchen mit mindestens einem Brenner bearbeitet, um die Böden der Glasfläschchen grob zu formen. Im zweiten Bodenformungsschritt werden die Böden der Glasfläschchen mit mindestens einem Brenner weiterbearbeitet, um die Böden der Glasfläschchen flach zu formen. Im dritten Bodenformungsschritt werden die Böden der Glasfläschchen mit mindestens einem Brenner weiterbearbeitet, um die schon geformten Böden der Glasfläschchen weiter zu verfeinern. Im Matrizen-Bodenformungsschritt werden die Böden der Glasfläschchen, unter Aufwenden eines relativ hohen Gasdrucks (bevorzugter Weise 0,5 bis 3,0 bar) in eine Formmatrix gepresst, um die Böden final zu formen. Im Bodenkühlungs-Schritt werden die Böden der Glasfläschchen schließlich abgekühlt. Im Entnahme-Schritt werden die fertigen Glasfläschchen aus der Bodenmaschine entnommen. Im Leer-Schritt ist die Halteeinheit der Bodenmaschine leer und wird diese vorbereitet, um im nächsten Schritt wieder ein neues Glasfläschchen aufzunehmen.

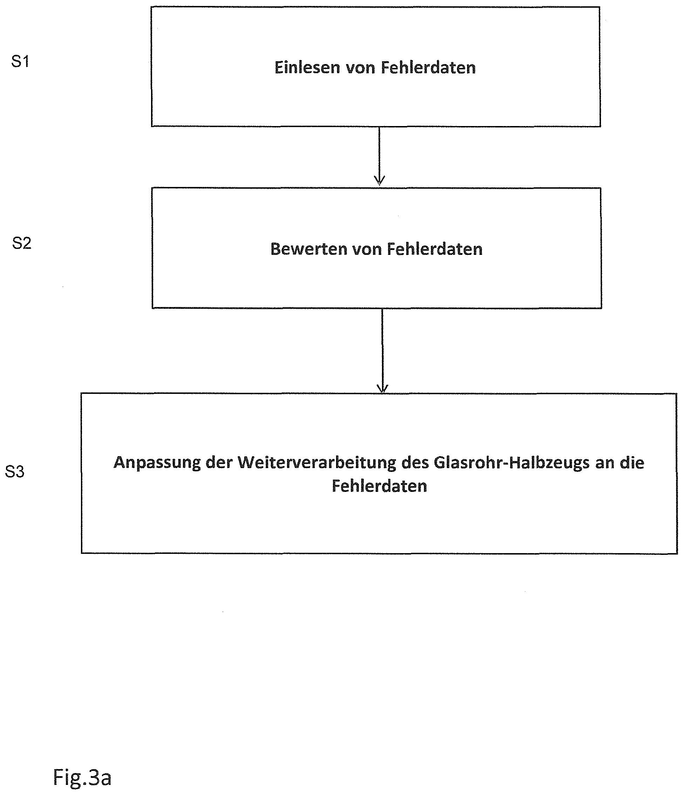

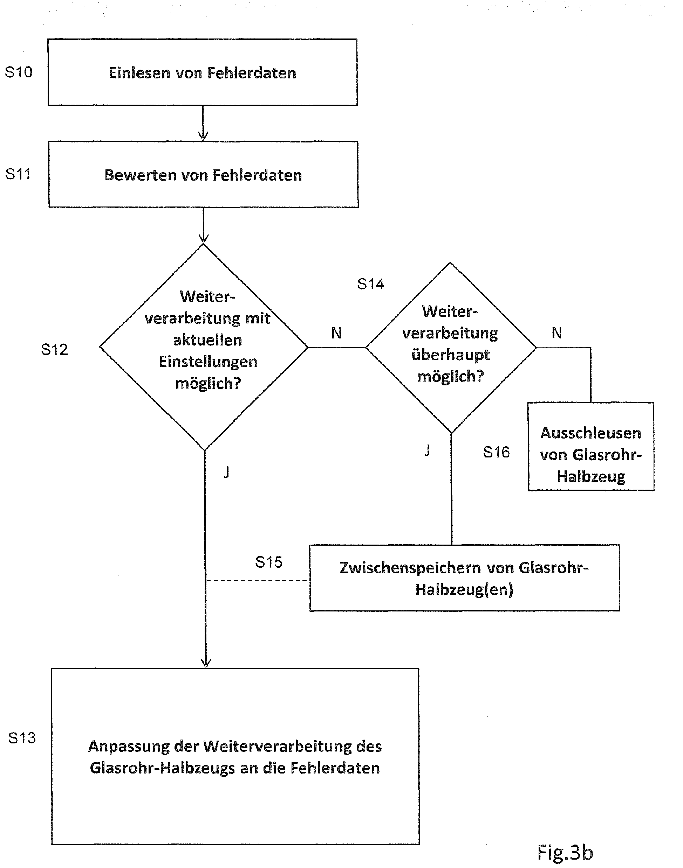

Bei der thermischen Umformung sind die Böden der Glasfläschchen während der meisten Bearbeitungsschritte relativ plastisch, d.h. sie weisen eine relativ geringe Viskosität auf. Dabei werden die Prozessparameter beim Abtrennen der Glasfläschchen von einem Glasrohr-Halbzeug aber auch bei den weiteren Bearbeitungsschritten zur Bodenformung an der nachgeordneten Bodenmaschine - ohne Verwendung der vorgenannten Fehlerdaten - geeignet gewählt und an die Eigenschaften des jeweils verarbeiteten Glasrohr-Halbzeugs oder des jeweils gerade verarbeiteten Unterabschnitts des jeweiligen Glasrohr-Halbzeugs angepasst, wie nachfolgend genauer anhand der Figuren 3a und 3b beschrieben, mit dem Ziel, Glasbehälter mit möglichst homogenen Eigenschaften auszubilden, die die geforderten vergleichsweise engen Toleranzen stets einhalten, aber sich auch durch weitere vorteilhafte physikalische oder physikalisch-chemische Eigenschaften auszeichnen, insbesondere durch eine hohe chemische Beständigkeit, eine geringe Ionenabgabe, insbesondere von AlkaliIonen, in die in dem Glasbehälter aufzubewahrende Substanz und eine geringe Delaminationsneigung. Dabei ist die sog. Delamination herkömmlich dadurch bedingt, dass aufgrund der im Bereich des Glasbehälter-Bodens vorherrschenden sehr hohen Temperaturen Alkaliborate, Natrium und dergleichen aus dem heißen Glas ausdampfen, die sich an kühleren Bereichen der Glasbehälter unmittelbar wieder abscheiden, insbesondere in einer ringförmigen Zone unter einem gewissen Abstand zum Glasbehälterboden. Dieses unter dem Namen Delaminationsneigung bekannte Phänomen erschwert das Gewährleisten einer konstanten, optimalen Qualität der Glasbehälter. Im heißen Bereich ist insbesondere auch die stöchiometrische Zusammensetzung des Glases verändert. Durch das spätere Abkühlen des Glasbehälters entsteht hierdurch eine Phasentrennung der Oberflächenschicht, die sich weiter negativ auf die chemische Beständigkeit des Glasbehälters auswirken kann. Aufgrund der herkömmlich teilweise unkontrollierten Bedingungen während der Heissformgebungsprozesse führt dies zu weiteren Unregelmäßigkeiten bei der Herstellung der Glasbehälter.

Zur Weiterverarbeitung des jeweiligen Glasrohr-Halbzeugs durch eine zusätzlich optional ausgeführte thermische Umformung werden an der Mehrzahl von Untereinheiten 21-24 der Vorrichtung 20 geeignete Prozessparameter eingestellt, beispielsweise Prozesstemperaturen und/oder Prozesszeiten und/oder Prozesstaktungen und/oder Prozessdrücke und/oder Heizleistungen von Brennern und/oder Drehgeschwindigkeiten zum Rotieren des Glasrohr-Halbzeugs während der Weiterverarbeitung oder dergleichen. Erfindungsgemäß werden diese Prozessparameter beim Weiterverarbeiten des Glasrohr-Halbzeugs einschließlich der zumindest abschnittsweise durchgeführten thermischen Umformung in Abhängigkeit von den ermittelten Fehlerdaten für das jeweilige Glasrohr-Halbzeug 1 geeignet eingestellt. Diese Prozessparameter, die die thermische Umformung betreffen, werden jedoch erfindungsgemäß nicht in Abhängigkeit von den jeweiligen Fehlerdaten mittels der Steuerungseinrichtung 16 gesteuert oder geregelt. Vielmehr werden diese Prozessparameter auf Grundlage anderer Kriterien geeignet eingestellt.

Wie in der Fig. 2b gezeigt, können die Fehlerdaten 30, 31 in der Datenbank beispielsweise in Form einer Nachschlagetabelle in Zuordnung zu jeweiligen Rohr-Identifizierungsinformationen Rohr-ID1, Rohr-ID2 ... gespeichert sein.

Nachfolgend werden anhand der Figuren 3a und 3b zwei Ausführungsbeispiele für ein Verfahren gemäß der vorliegenden Erfindung zum Weiterverarbeiten eines Glasrohr-Halbzeugs zu einem Endprodukt beschrieben, beispielsweise zu einem Glasbehälter.

Gemäß der Fig. 3a werden die Fehlerdaten für ein jeweiliges Glasrohr-Halbzeug, das weiterverarbeitet werden soll, in dem Schritt S1 zunächst eingelesen, beispielsweise durch Zugriff auf eine externe Datenbank 12 (vgl. Fig. 2a), durch Auslesen eines Datenträgers oder einer Markierung, die auf dem Glasrohr-Halbzeug vorgesehen ist. In dem Schritt S2 werden die ausgelesenen Fehlerdaten dann bewertet, insbesondere daraufhin, ob die aktuell für die Weiterverarbeitungsvorrichtung eingestellten Prozessparameter für das aktuell zu verarbeitende Glasrohr-Halbzeug verändert werden müssen oder nicht. Wenn in dem Schritt S2 festgestellt wird, dass die aktuellen Prozessparameter der Weiterverarbeitungsvorrichtung auch für das neu zu verarbeitende Glasrohr-Halbzeug bzw. einen Unterabschnitt davon geeignet sind, erfolgt die Weiterverarbeitung des neu zu verarbeitenden Glasrohr-Halbzeugs bzw. des Unterabschnitts davon mit den aktuellen Prozessparametern. Andernfalls werden die Prozessparameter der Weiterverarbeitung an die Fehlerdaten des neu zu verarbeitenden Glasrohr-Halbzeugs bzw. des Unterabschnitts angepasst. Nach Weiterverarbeitung des neu zu verarbeitenden Glasrohr-Halbzeugs bzw. des Unterabschnitts davon kehrt das Verfahren zurück zum Schritt S1, um ein anderes Glasrohr-Halbzeug bzw. einen anderen Unterabschnitt des aktuell zu verarbeitenden Glasrohr-Halbzeugs weiter zu verarbeiten.

Abweichend zum Verfahren gemäß der Fig. 3a wird bei dem Verfahren gemäß der Fig. 3b nach dem Schritt S11 zunächst abgefragt, ob eine Weiterverarbeitung des neu zu verarbeitenden Glasrohr-Halbzeugs bzw. des nächsten Unterabschnitts davon überhaupt mit den aktuellen Einstellungen der Prozessparameter der Weiterverarbeitung möglich ist. Wenn dies nicht der Fall ist, wird anstelle einer sofortigen Änderung der Prozessparameter zunächst in dem Schritt S14 überprüft, ob eine Weiterverarbeitung des neu zu verarbeitenden Glasrohr-Halbzeugs bzw. des nächsten Unterabschnitts des aktuell zu verarbeitenden Glasrohr-Halbzeugs überhaupt möglich ist, also wenn die Prozessparameter entsprechend an die jeweiligen Fehlerdaten angepasst würden. Wenn dies der Fall ist, wird das neu zu verarbeitende Glasrohr-Halbzeug bzw. der nächste zu verarbeitende Unterabschnitt des aktuell zu verarbeitenden Glasrohr-Halbzeugs im Schritt S15 zwischengespeichert. Andernfalls wird das neu zu verarbeitende Glasrohr-Halbzeug bzw. der nächste zu verarbeitende Unterabschnitt des aktuell zu verarbeitenden Glasrohr-Halbzeugs im Schritt S16 aussortiert, weil ja in dem Schritt S14 festgestellt wurde, dass eine Weiterverarbeitung für das aussortierte Glasrohr-Halbzeug bzw. den nächsten zu verarbeitenden Unterabschnitt überhaupt nicht möglich ist.

Anschließend kehrt das Verfahren zunächst zurück zum Schritt S10 und fährt mit einer Weiterverarbeitung des nächsten Glasrohr-Halbzeugs bzw. des nächsten Unterabschnitts des aktuell zu verarbeitenden Glasrohr-Halbzeugs fort (Schritte S10-S13), es sei denn, dass auch das nächste Glasrohr-Halbzeug bzw. der nächste Unterabschnitt des aktuell zu verarbeitenden Glasrohr-Halbzeugs nicht weiter verarbeitet werden kann (negative Entscheidung in Schritt S14 und Aussortierung in Schritt S16) oder auch das nächste Glasrohr-Halbzeug bzw. der nächste Unterabschnitt des aktuell zu verarbeitenden Glasrohr-Halbzeugs im Schritt S15 zwischengespeichert wird.

Wenn eine genügend große Anzahl von Glasrohr-Halbzeugen bzw. Unterabschnitten in dem Schritt S15 zwischengespeichert worden sind, kann das Verfahren nach Rückkehr zum Schritt S10 zunächst die Prozessparameter für die in dem Schritt S15 zwischengespeicherten Glasrohr-Halbzeuge bzw. Unterabschnitte geeignet anpassen bzw. einstellen und dann diese Glasrohr-Halbzeuge bzw. Unterabschnitte mit Prozessparametern, die an die Fehlerdaten für diese Glasrohr-Halbzeuge bzw. Unterabschnitte angepasst sind, im Schritt S13 weiter verarbeiten. Dadurch ergibt sich eine Zeitersparnis, weil die Prozessparameter zur Weiterverarbeitung nicht permanent angepasst werden müssen, sondern nur gruppenweise, also für die nächste Gruppe von Glasrohr-Halbzeugen bzw. Unterabschnitten, die in dem Schritt S14 zwischengespeichert wurden.

Der Schritt S14 eignet sich insbesondere auch zur Vorselektion von Glasrohr-Halbzeugen bzw. Unterabschnitten in eine oder mehrere Klassen von Glasrohr-Halbzeugen bzw. Unterabschnitten, für die die gleichen Prozessparameter zur Weiterverarbeitung angewendet werden müssen, sodass die Weiterverarbeitung auch gruppenweise bzw. sequentiell für solche Klassen von Glasrohr-Halbzeugen bzw. Unterabschnitten ausgeführt werden kann, wobei die Prozessparameter zur Weiterverarbeitung dann nur jeweils an die Fehlerdaten für die jeweils neue Klasse von Glasrohr-Halbzeugen bzw. Unterabschnitten angepasst zu werden brauchen.

Als Voraussetzung zur Durchführung des erfindungsgemäßen Verfahrens müssen während der Rohrherstellung für die Weiterverarbeitung relevante Fehler der Glasrohr-Halbzeuge erfasst bzw. bereitgestellt werden. Dies betrifft insbesondere Information zur Qualität des jeweiligen Glasrohr-Halbzeugs bei der Rohrherstellung ermittelt werden, insbesondere zumindest eine der folgenden Informationen für das Glasrohr-Halbzeug: Einschlüsse in einer Wand des Glasrohr-Halbzeugs, einschließlich von Blasen, Knoten, kristallinen Bereichen und dergleichen; mechanische Beschädigungen auf der Oberfläche oder im Volumen des Glasrohr-Halbzeugs, einschließlich von Kratzern, Materialabrieb; Inhomogenitäten auf der Oberfläche oder im Volumen des Glasrohr-Halbzeugs, einschließlich von Bereichen einer anderen optischen Brechkraft und optischer Schlieren; Fehlertyp. Dabei beinhalten die Fehlerdaten bevorzugt weiterhin Information zu Ort und Lage und bevorzugt auch zur Größe der Fehler des Glasrohr-Halbzeugs.

Diese Fehlerdaten werden nach einer Gut-/Schlecht-Selektion der Glasrohre nicht mehr rohrspezifisch archiviert, ohne dass ein weiterverarbeitender Betrieb später auf diese Daten nicht wieder zugreifen kann und dieser dann die entsprechenden Messungen wiederholen muss. Vielmehr werden die bei der Rohrherstellung anfallenden Daten erfindungsgemäß mit relevanten Informationen über die Eigenschaften eines jeweiligen Glasrohrs für einen weiterverarbeitenden Betrieb verfügbar gemacht, so dass eine individuelle Weiterverarbeitung der Glasrohre angepasst an diese Fehlerdaten erfolgen kann und eine nochmalige Messung der relevanten Eigenschaften des Glasrohr-Halbzeugs erfindungsgemäß überflüssig wird. Zu diesem Zweck erhält jedes Rohr im Herstellungsprozess eine Codierung, die entweder direkt oder indirekt als Datenreferenz Messdaten enthält, die einem weiterverarbeitenden Betrieb ausgelesen und für die Weiterverarbeitung der Glasrohre verwendet werden können.

Ein erstes Anwendungsbeispiel betrifft die Verwendung von Fehler-Messwerten zur Selektion von Glasrohren für die Herstellung von Endprodukten (beispielsweise Hohlglasprodukten) mit engen Toleranzen und/oder wenigen Fehlern einer vorbestimmten Maximalgröße, beispielsweise eines Glasrohrs mit einem Soll-Außendurchmesser von 10,85 mm und einer Toleranz ± 0,1 mm und Fehlern eine Maximalgröße von beispielsweise 0,1 mm im Durchmesser. Aufgrund der online-Messwerte, die während der Glasrohrproduktion ermittelt wurden, werden die Glasrohre z.B. mit den Informationen zur Größe der Fehler und des jeweiligen Fehlertyps (z.B. Einschluss, Kratzer, Luftblase etc.) gekennzeichnet. Die Glasrohre werden erfindungsgemäß während der Fertigung in der Art codiert, dass die Fehlerdaten, die während der Glasrohrproduktion gemessen wurden, dem Glasrohr zugeordnet werden. Die Zuordnung kann entweder direkt erfolgen, indem die relevanten Messwerte in eine Markierung des Glasrohres geschrieben werden, oder indirekt, indem jedes Glasrohr mit einer eindeutigen Seriennummer codiert wird und die relevanten Fehlerdaten für das Glasrohr bei einem weiterverarbeitenden Betrieb aus einer Liste/Datenbank abgerufen werden. Die indirekte Methode erlaubt, wesentlich mehr Fehlerdaten zur Verfügung zu stellen.

Für das Anwendungsbeispiel können die Fehler/Fehlertypen von Glasrohren beispielsweise in einem oberen, mittleren und unteren Toleranzbereich dargestellt werden. Durch das Auslesen der Messdaten können die Glasrohre dann in mehreren Klassen selektiert werden und später individuell jedoch mit einheitlichen Paramatern, die an die Fehler/Fehlertypen angepasst sind, weiterbehandelt werden, entsprechend der jeweiligen Klasse. Einfachste Anwendung ist beispielsweise die Vorsortierung der Glasrohre in Fehlertyp-Klassen und die Weiterverarbeitung gruppenweise entsprechend diesen Fehlertyp-Klassen, und zwar jeweils mit Prozessparametern, die an die jeweilige Fehlertyp-Klasse angepasst sind. Vorteil ist die wesentlich stabilere Bearbeitung des Glasrohrs mit standardisierten Einstellungen der Weiterverarbeitungseinrichtung und minimalen Benutzereingriffen. Auf diese Weise lassen sich eng tolerierte Endprodukte und/oder Endprodukte mit höherer Qualität herstellen, ohne für das Ausgangs-Glasrohr das Einhalten von Fehler-Obergrenzen zu fordern, die beim Hersteller extreme Aufwendungen und hohen Ausfall bedeuten würden. Gegenüber dem aktuellen Stand der Technik entfällt insbesondere der Aufwand, die Rohre in der gesamten Länge zu vermessen. Die Daten können beispielsweise direkt mit Hilfe eines einfachen Lesegerätes für den Code auf dem Rohr ausgelesen werden.

Weitere Anwendungsmöglichkeit ist die Nutzung der Fehlerdaten für die Anpassung des Betriebs von Rohrbearbeitungsmaschinen, wie beispielsweise Schneidevorrichtungen.

Ebenso könnten einzelne Rohre mit unerwünschten Eigenschaften ausselektiert werden, wie z.B. Rohre mit zu hohen Fehlern.

Vorteile für den Rohrhersteller sind die Reduktion des Produktspektrums, da wenige Toleranzen ausreichen, um unterschiedlichste Anforderungen in der Weiterverarbeitung zu bedienen.

Anwendungsbeispiel Wareneingangskontrolle (beim weiterverarbeitenden Betrieb):
Statt einer Überprüfung von Stichproben von gelieferten Glasrohren bei der Wareneingangskontrolle bei einem weiterverarbeitenden Betrieb auf Einhaltung von Toleranzen, statistischen Kenngrößen etc. kann erfindungsgemäß anhand der ebenfalls bereitgestellten Fehlerdaten, also anhand von konkreten Messdaten von Glasrohren, beim weiterverarbeitenden Betrieb ein Abgleich der Messdaten von Hersteller und weiterverarbeitendem Betrieb (= Anwender) erfolgen. Dieser Abgleich braucht nur für wenige gelieferte Glasrohre erfolgen, da dann die Abweichungen für alle anderen Glasrohre entsprechend berechnet werden können. Der Aufwand für die Wareneingangskontrolle beim weiterverarbeitenden Betrieb wird auf diese Weise dramatisch reduziert und die Genauigkeit der Vergleichsmessungen wird deutlich erhöht. Im Gegensatz zu maschinell gefertigten Teilen weisen Glasrohre auf Grund des Fertigungsverfahrens Fehler im Material oder auf der Oberfläche auf, wie beispielsweise mechanische Beschädigungen auf der Oberfläche oder im Volumen des Glasrohr-Halbzeugs, einschließlich von Kratzern, Materialabrieb; Inhomogenitäten auf der Oberfläche oder im Volumen des Glasrohr-Halbzeugs, einschließlich von Bereichen einer anderen optischen Brechkraft und optischer Schlieren. Dabei auftretende Fehlerschwankungen machen herkömmlich direkte Vergleichsmessungen mit hoher Genauigkeit unmöglich, da bereits geringe Abweichungen der Messpositionen (einige mm) Messfehler von mehreren µm bewirken können. Zur Vermeidung dieses Effektes können im Code des Glasrohres Fehlerposition, Fehlergröße und Fehlertyp hinterlegt werden, um exakte Vergleichsmessungen zu ermöglichen. Dieses Verfahren ermöglicht damit den Übergang von Stichprobenprüfungen zu Einzelstückprüfungen als Basis für eine praktisch fehlerfreie ("Zero Defekt") Produktion.

Die Daten zur Glasqualität des Glasrohrs selbst (z.B. Blasen, Knoten, Kristalle, ...) können somit im Code hinterlegt werden und die Bedingungen einer individuellen Weiterverarbeitung der Glasrohre können an die Glasqualität des Glasrohrs (oder allgemeiner an die jeweiligen Fehlerdaten) angepasst werden.

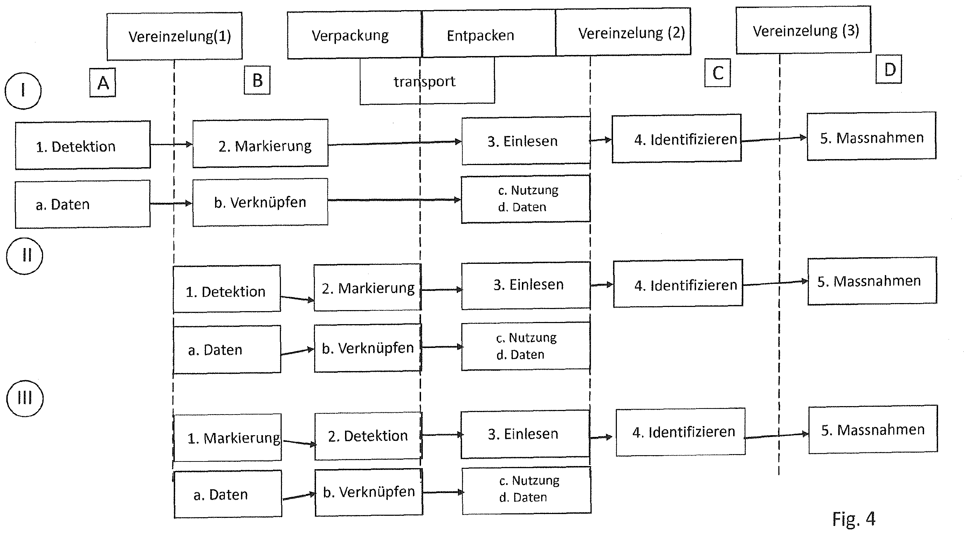

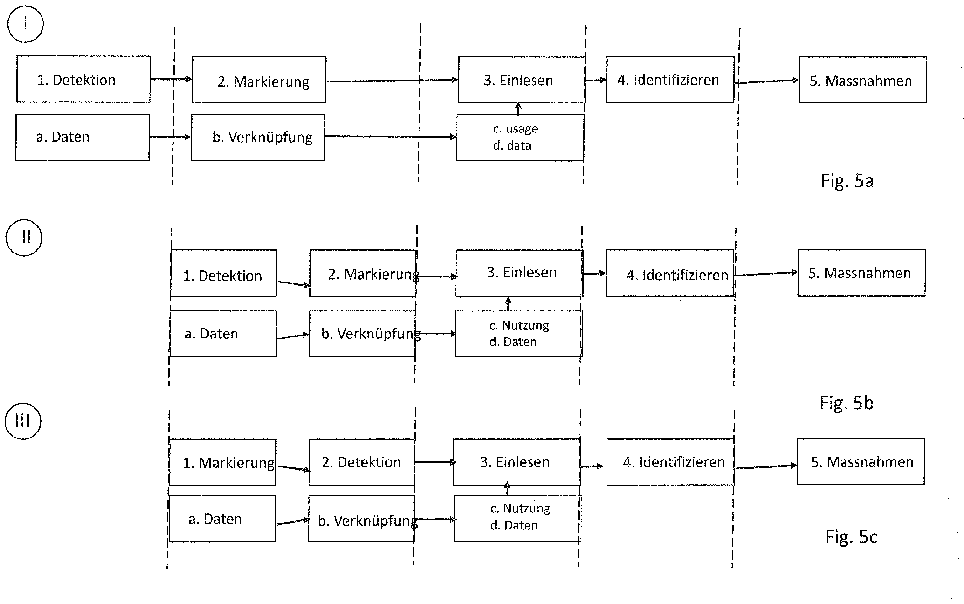

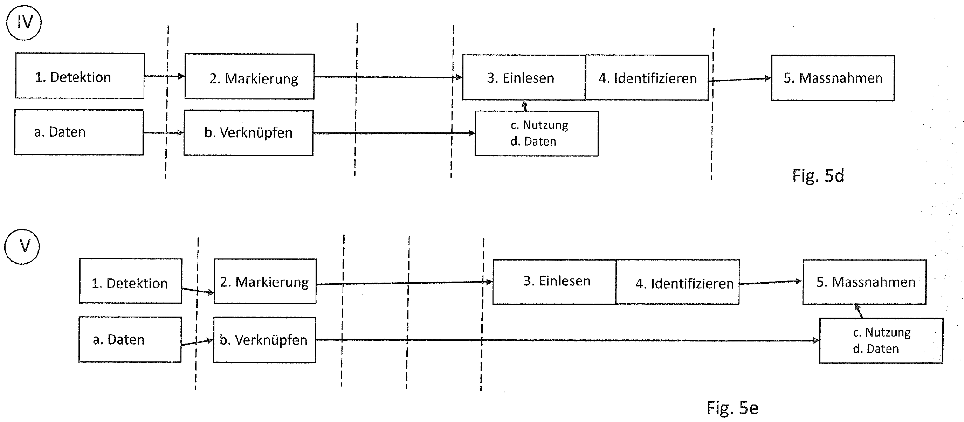

Wie vorstehend ausgeführt, handelt sich bei der vorgenannten Markierung nicht um eine Markierung zur Rückverfolgung, insbesondere nicht zur Rückverfolgung bis zur Heissformgebung, da die aufgenommenen Fehlerdaten nicht dazu genutzt werden, Fehler in den Vorläuferprozessen zur Herstellung des Glasrohr-Halbzeugs zu finden oder die Verantwortlichkeiten für Fehler zu finden. Vielmehr werden die Fehlerdaten dazu genutzt, um die Bedingungen bei der Weiterverarbeitung (wie in den nachfolgenden Prozessflussdiagrammen gemäß den Figuren 4 und 5a-5e gezeigt) geeignet an die jeweiligen Fehlerdaten anzupassen, was im Extremfall auch zum Verwerfen des Endproduktes führen kann.

Nachfolgend werden anhand der Figuren 4 und 5a-5e weitere bevorzugte Ausführungsbeispiele des Verfahrens gemäß der vorliegenden Erfindung beschrieben.

Genauer gesagt zeigt die Fig. 4 in drei Prozessflussdiagrammen, die übereinander dargestellt sind, drei Ausführungsvarianten (I bis III) eines Verfahrens gemäß der vorliegenden Erfindung.

Wie im oberen Teil der Fig. 4 gezeigt, wird während der Heissformgebung des Glasrohrstrangs, von dem die Glasrohr-Halbzeuge abgetrennt werden, die Qualität des Rohrstrangs überprüft (Schritt 1). Insbesondere werden hier Fehlerdaten zu dem Glasrohrstrang ermittelt. Dabei können die Fehler einzeln vermessen werden, insbesondere hinsichtlich Größe und Lage, und wird bevorzugt auch ein Fehlertyp (Einschluss, Kratzer, Luftblase etc.) ermittelt. Die entsprechenden Fehlerdaten werden zur Anpassung der Weiterverarbeitung von Glasrohr-Halbzeugen verwendet, insbesondere zum Abtrennen von Unterabschnitten von einem Glasrohr-Halbzeug, zum Aussortieren von Glasrohr-Halbzeugen oder Unterabschnitten davon minderer Qualität oder zur Weiterverarbeitung an einem anderen Ort an dem jeweiligen Glasrohr-Halbzeug, insbesondere einem Ort mit geeigneten Fehlerdaten, die eine ausreichende Qualität an diesem Ort anzeigen. Die Fehlerdaten werden langfristig in einer Datenbank oder auf einem Datenspeicher mit Zugriffsmöglichkeit durch einen weiterverarbeitenden Betrieb gespeichert (Schritt 1a).

Bringt man nach der Vereinzelung der Glasrohr-Halbzeuge auf jedes Glasrohr-Halbzeug eine individuelle Nummer auf (Schritt 2), also beispielsweise eine fortlaufende Seriennummer, und verknüpft diese mit den in der Datenbank oder auf dem Datenträger abgelegten Fehlerdaten zur Rohrqualität im allgemeinen (Schritt 2b) und einer Qualitäts-Karte des Glasrohr-Halbzeugs (d.h. an welchem Ort auf dem Glasrohr-Halbzeug ist welcher Fehler oder Qualitätsmangel), so kann man, nachdem man die Glasrohr-Halbzeuge wieder eingepackt hat, diese individuelle Nummer zur Weiterverarbeitung der Glasrohr-Halbzeuge einlesen (Schritt 3) und in der Datenbank oder auf dem Datenträger die Qualität bzw. Fehler des jeweiligen Glasrohr-Halbzeugs nachschlagen (Schritt 3c). Ist die Gesamtqualität und die Qualitäts-Karte bekannt, kann nun nach (oder vor) dem Abtrennen von Unterabschnitten von dem Glasrohr-Halbzeug, aus denen durch thermische Umformung Hohlglasprodukte, wie beispielsweise Vials, Karpulen oder Spritzenkörper, hergestellt werden, die Fehlerdaten für das einzelne Rohrstück errechnet (Schritt 4) und die Weiterverarbeitung an die Fehlerdaten des Rohrstücks angepasst werden (Schritt 5) oder im Extremfall das Rohrstück wegen mangelnder Qualität verworfen werden.

Dabei beinhalten die Fehlerdaten Information zu den kosmetischen und dimensionellen ortsaufgelösten Eigenschaften des Glasrohr-Halbzeugs, insbesondere zu Produktionsfehlern und deren Koordinaten (Qualitäts-Karte des Glasrohr-Halbzeugs). Mit Verknüpfen der Fehlerdaten mit dem Glasrohr-Halbzeug ist insbesondere ein direktes Verknüpfen gemeint, insbesondere durch Aufbringen einer individuellen Nummer oder eines Codes (Seriennummer, Strich- oder QR-Code) durch direktes Schreiben auf dem Glasrohr-Halbzeug mit einem Laser, durch Aufdrucken oder Aufbringen von Etiketten oder Anordnen des Glasrohr-Halbzeugs in einer definierten Reihenfolge in einem Stapel von Glasrohr-Halbzeugen und Hinterlegen der Fehlerdaten auch bezüglich der Reihenfolge der Glasrohr-Halbzeuge in diesem Stapel. Die Nutzung der Fehlerdaten beinhaltet insbesondere das zur Verfügung stellen (digital wie analog) einer Qualitäts- Karte des individuellen Glasrohr-Halbzeugs, wobei digital das zur Verfügung stellen der digitalen Fehlerdaten auf einem Server, einer Datenbank oder einem anderem Speichermedium unter der Codierung des Glasrohr-Halbzeugs oder analog durch Weitergeben der Qualitäts-Karte des Glasrohr-Halbzeugs oder Auftragen einzelner oder mehrerer Fehlerbilder direkt auf das Glasrohr-Halbzeug beinhaltet (z.B. durch Laserkodierung von sog. Airlines).

Weitere Erläuterung von verwendeten Begriffen:
Detektion ist insbesondere die Inspektion des produzierten Glasrohr-Halbzeugs auf kosmetische und dimensionelle Qualität mit Hilfe von Kontrollgeräten, insbesondere Kontrollgeräten zur visuellen Inspektion. Markierung beinhaltet in diesem Zusammenhang insbesondere alle individuellen Markierungen des Glasrohres wie z.B. individuelle Nummern, QR-Codes, Balkencodes, Linien-Scan-Codes, die auf das Glasrohr-Halbzeug aufgebracht werden, beispielsweise durch Laser, Etiketten oder Farben. Markierung beinhaltet auch eine indirekte Individualisierung der Glasrohr-Halbzeuge, beispielsweise durch Legen der Glasrohr-Halbzeuge einer bekannten Reihenfolge in einem Stapel und Individualisierung des Stapels oder Legen der Glasrohr-Halbzeuge in einer Reihenfolge auf einer Palette und Individualisierung der Palette. Ferner beinhaltet Markieren Methoden des nicht individuellen Markierens, wie z.B. Markieren der Glasrohr-Halbzeuge mit geringerer Qualität durch eine Nummer, QR-Code usw. oder direktes Markieren des Fehlers durch ein Zeichen, insbesondere Markieren der Region geringerer Qualität durch Aufbringen einer Markierung durch Laser, Farbe und Etiketten, z.B. Lasermarkierung von Fehlern z.B. Airlines.

Einlesen der Markierung beinhaltet in diesem Zusammenhang insbesondere Methoden des Lesens von Zahlen, Strichcodes und QR-Codes etc., aber auch das Einlesen durch Imaging der vorstehend aufgelisteten nicht individuellen Codes durch Objekt erkennende Imaging Verfahren. Hierbei kann das Einlesen der Markierung ausdrücklich vor der Vereinzelung (Schritt 2) der Glasrohr-Halbzeuge in dem Stapel erfolgen, aber auch nach der Vereinzelung (Schritt 2) der Glasrohr-Halbzeuge aus dem Stapel oder im Falle von direkter Markierung der Regionen mangelnder Qualität auch nach der Vereinzelung (Schritt 3) im Rohrabschnitt bzw. im Endprodukt

Identifizierung der Region minderer Qualität kann z.B. direkt durch Erkennen des Fehler markierenden Codes erfolgen, vorzugsweise indirekt durch Einlesen oder Errechnen der individuellen Nummer, Kartieren der Regionen mangelhafter Qualität, Errechnen des Rohrabschnittes, an dem Maßnahmen notwendig sind, und dergleichen.

Maßnahmen in diesem Zusammenhang sind insbesondere Anpassungen des Prozesses, die sich aus der Region mangelhafter Qualität und dem Qualitätsmangel ergeben, insbesondere
- Aussortieren von Rohrabschnitten, Halbfertigprodukten und Produkten wegen kritischer Qualitätsmängel, die nicht kompensiert werden können, insbesondere von sog. Stones, Airlines, Rissen vor der Heissformgebung nach Vereinzelung (Schritt 3), nach der Heissformgebung oder Weitergabe dieser Fehlerdaten an den Endkunden;
- ferner insbesondere eine Weiterverarbeitung an einem geeigneten Ort eines jeweiligen Glasrohr-Halbzeugs, für den die Fehlerdaten eine ausreichende Qualität anzeigen, wobei diese Weiterverarbeitung auch eine Weiterverarbeitung einschließlich einer zumindest abschnittsweise ausgeführten thermischen Umformung beinhalten kann, wie vorstehend ausgeführt.

Weitere Erläuterungen zu den Ausführungsbeispielen nach den Figuren 5a bis 5e:
Die Verfahrensvariante II nach der Fig. 5b ist analog zur Verfahrensvariante I nach der Fig. 5a, wobei die Detektion nach der Vereinzelung (1) erfolgt.

Die Verfahrensvariante III nach der Fig. 5c ist analog zur Verfahrensvariante II nach der Fig. 5b, wobei die Detektion nach der der Markierung erfolgt.

Die Verfahrensvariante IV nach der Fig. 5d ist analog zu den Verfahrensvariante I-III gemäß den Figuren 5a bis 5c, wobei die ersten Verfahrensschritte analog zur Verfahrensvariante I, II oder III erfolgen. Hier werden die Fehlerdaten erst nach der Vereinzelung (3) gelesen und genutzt.

Die Verfahrensvariante V ist analog zu den Verfahrensvarianten I-III, wobei die ersten Verfahrensschritte analog Verfahrensvariante zur I, II oder III erfolgen. Hier werden die Fehlerdaten erst nach der Produktion und Vereinzelung (Schritt 5) genutzt. Die Fehlerdaten können dem weiterverarbeitenden Betrieb beispielsweise anzeigen, ob die Airline, die gerade detektiert wird, offen oder geschlossen ist.

Eine weitere Verfahrensvariante VI (nicht gezeigt) ist eine Kombination der vorgenannten Varianten I-IV.

Für die Fehlerdetektion und die Markierung der Oberfläche des Glasrohr-Halbzeugs sind insbesondere folgende Positionen im Rohrherstellungsprozess denkbar:

| **Position der Fehlerdetektion im Rohrherstellungsprozess** | **Position der Markierung der Glasoberfläche im Rohrherstellungsprozess** |
|---|---|
| In Nachverarbeitungslinie (am vereinzelten Rohr) | In Nachverarbeitungslinie (am vereinzelten Rohr) |
| In der Ziehbahn am Rohrstrang | In der Ziehbahn am Rohrstrang |
| | In Nachverarbeitungslinie (am vereinzelten Rohr) |

Das Verfahren gemäß der vorliegenden Erfindung eignet sich allgemein für die Weiterverarbeitung von Glasrohren zur Fertigung beliebiger eng tolerierter Endprodukte. Ein bevorzugtes Beispiel für solche Endprodukte sind Behälter für Substanzen für pharmazeutische, medizinische oder auch kosmetische Anwendungen, beispielswiese Vials, Karpulen oder Spritzenkörper.

### BEZUGSZEICHENLISTE

- 1: Glasrohr oder Glasrohr-Halbzeug
- 2: Rohrstrangmarkierung
- 3: Rohrmarkierung
- 4: Rohr-Identifizierungsinformation
- 5: zusätzliche Rohrdaten

- 10: Messeinrichtung / Mess- und Markierungseinrichtung
- 11: Steuerungseinrichtung (bei Glasrohr-Hersteller)
- 12: Datenbank

- 15: Ausleseeinrichtung
- 16: Steuerungseinrichtung (bei weiterverarbeitendem Betrieb)
- 17: Netzwerk

- 20: Weiterverarbeitungsvorrichtung
- 21: Untereinheit 1 von Weiterverarbeitungsvorrichtung 20
- 22: Untereinheit 2 von Weiterverarbeitungsvorrichtung 20
- 23: Untereinheit 3 von Weiterverarbeitungsvorrichtung 20
- 24: Untereinheit 4 von Weiterverarbeitungsvorrichtung 20

- 30: Fehlerdaten zu Rohr-ID 1
- 31: Fehlerdaten zu Rohr-ID2

- l: vorbestimmter Abstand
- Z: Längsrichtung

## Patentansprüche

1. Verfahren zum Weiterverarbeiten eines Glasrohr-Halbzeugs (1), mit den Schritten:
Bereitstellen des Glasrohr-Halbzeugs (1), wobei für das Glasrohr-Halbzeug Fehlerdaten bereitgestellt werden und das Glasrohr-Halbzeug (1) mit zumindest einer Markierung (3; 4) gekennzeichnet ist;
Auslesen der Fehlerdaten (2-5; 30-31) für das Glasrohr-Halbzeug (1) anhand der zumindest einen Markierung (3; 4), mit der das Glasrohr-Halbzeug (1) gekennzeichnet ist; und
Weiterverarbeiten des Glasrohr-Halbzeugs (1), insbesondere einschließlich einer zumindest abschnittsweise durchgeführten thermischen Umformung; wobei
die Weiterverarbeitung des Glasrohr-Halbzeugs (1) an die Fehlerdaten (2-5; 30-31), die für das Glasrohr-Halbzeug (1) ausgelesen wurden, unter der Kontrolle einer elektronischen Steuereinrichtung angepasst wird; wobei
die Fehlerdaten Information zur Qualität des jeweiligen Glasrohr-Halbzeugs betreffen, die bei der Rohrherstellung ermittelt werden, und
die Fehlerdaten weiterhin Information zu Ort und Lage und bevorzugt auch zur Größe der Fehler des Glasrohr-Halbzeugs beinhalten.

2. Verfahren nach Anspruch 1, wobei die Anpassung der Weiterverarbeitung des Glasrohr-Halbzeugs keine Steuerung oder Regelung eines Prozessparameters umfasst, der eine zumindest abschnittsweise durchgeführte thermische Umformung des Glasrohr-Halbzeugs betrifft.

3. Verfahren nach Anspruch 1 oder 2, wobei die Anpassung der Weiterverarbeitung des Glasrohr-Halbzeugs (1) ein Aussortieren oder vorübergehendes Zwischenspeichern eines Glasrohr-Halbzeugs umfasst, wenn auf Grundlage der Fehlerdaten für das Glasrohr-Halbzeug ermittelt wird, dass die Weiterverarbeitung des Glasrohr-Halbzeugs mit aktuellen Prozessparametern nicht möglich ist oder nur mit einer unzureichenden Qualität möglich ist.

4. Verfahren nach einem der vorhergehenden Ansprüche, wobei die Fehlerdaten Fehlerinformation für die gesamte Länge des Glasrohr-Halbzeugs (1) beinhaltet, oder
wobei die Fehlerdaten jeweils für Unterabschnitte des Glasrohr-Halbzeugs (1) einer vorbestimmten Länge (l) in einer Längsrichtung (z) des Glasrohr-Halbzeugs (1) bereitgestellt werden.

5. Verfahren nach einem der vorhergehenden Ansprüche, wobei das Glasrohr-Halbzeug (1) weiterhin entsprechend den gemittelten Fehlerdaten in eine von mehreren Klassen klassifiziert bereitgestellt wird.

6. Verfahren nach einem der vorhergehenden Ansprüche, wobei die Fehlerdaten, die Information zur Qualität des jeweiligen Glasrohr-Halbzeugs betreffen, zumindest eine der folgenden Informationen zu Fehlern des Glasrohr-Halbzeugs beinhalten:
Einschlüsse in einer Wand des Glasrohr-Halbzeugs, einschließlich von Blasen, Knoten, kristallinen Bereichen und dergleichen; mechanische Beschädigungen auf der Oberfläche oder im Volumen des Glasrohr-Halbzeugs, einschließlich von Kratzern, Materialabrieb; Inhomogenitäten auf der Oberfläche oder im Volumen des Glasrohr-Halbzeugs, einschließlich von Bereichen einer anderen optischen Brechkraft und optischer Schlieren; Fehlertyp.

7. Verfahren nach einem der vorhergehenden Ansprüche, wobei die Fehlerdaten weiterhin ortsaufgelöste Information in Umfangsrichtung des Glasrohr-Halbzeugs zu Ort und Lage und bevorzugt auch zur Größe der Fehler des Glasrohr-Halbzeugs beinhalten.

8. Verfahren nach einem der vorhergehenden Ansprüche, wobei
die zumindest eine Markierung bevorzugt eine Rohr-Identifizierungsinformation (4) enthält, anhand der die Fehlerdaten für das Glasrohr-Halbzeug aus einem Datenspeicher oder einer Datenbank (12) ausgelesen werden, oder
die Fehlerdaten für das Glasrohr-Halbzeug bevorzugt in weiteren Markierungen (2) auf dem Glasrohr-Halbzeug oder in zumindest einem weiteren Markierungsabschnitt (5) der zumindest einen Markierung (3; 4) auf dem Glasrohr-Halbzeug enthalten sind.

9. Verfahren nach Anspruch 8, wobei die zumindest eine Markierung (3; 4) mittels eines der folgenden Verfahren aufgebracht worden ist:
Direktmarkieren eines Fehlers durch mechanisches Einkerben, Einkerbung durch Laserbehandlung, Einbrennen eines Pigmentfarbstoffs mit einem Laser, Tintenstrahldruck, Lasermarkieren; Aufbringen, insbesondere Aufdrucken, einer Strichmarkierung oder Matrixcode-Markierung, welche die Fehlerdaten oder einen Datenlink auf diese codiert; Aufkleben eines Aufklebers, welcher die Fehlerdaten oder einen Datenlink auf diese codiert; Anbringen eines RFID-Tags an dem Glasrohr-Halbzeug, welcher die Fehlerdaten oder einen Datenlink auf diese codiert; oder
wobei die zumindest eine Markierung (3; 4) durch Wechselwirken eines Laserstrahls mit dem Glas des Glasrohr-Halbzeugs erzeugt wird.

10. Verfahren nach Anspruch 9, wobei die zumindest eine Markierung (3; 4) durch Wechselwirken eines Laserstrahls mit dem Glas des Glasrohr-Halbzeugs bei Temperaturen oberhalb der Transformationstemperatur des Glases in eine Wand des Glasrohr-Halbzeugs erzeugt wird, insbesondere als digitaler Matrix-Code (DMC).

11. Verfahren nach Anspruch 9 oder 10, wobei die zumindest eine Markierung (3; 4) optisch und berührungsfrei ausgelesen wird, um die Fehlerdaten (2-5; 30-31) für das Glasrohr-Halbzeug (1) auszulesen.

12. Verfahren nach einem der vorhergehenden Ansprüche, bei dem
zumindest ein Glasrohr-Halbzeug vor dem Weiterverarbeiten gemessen und bewertet wird, und
gemessene Größen und Bewertungsdaten mit den Fehlerdaten für das zumindest eine Glasrohr-Halbzeug verglichen werden, um eine Abweichungsinformation zu ermitteln, wobei
die Weiterverarbeitung einer Mehrzahl von Glasrohr-Halbzeugen an die Fehlerdaten (2-5; 30-31), die für die jeweiligen Glasrohr-Halbzeuge ausgelesen werden, unter Berücksichtigung der ermittelten Abweichungsinformation angepasst wird.

13. Verfahren nach einem der vorhergehenden Ansprüche, wobei die Weiterverarbeitung des Glasrohr-Halbzeugs (1) weiterhin ein lokales Erwärmen eines Abschnittes des Glasrohr-Halbzeugs und ein Abtrennen eines Behälters durch Abtrennen von dem Glasrohr-Halbzeug im Bereich des lokal erwärmten Abschnittes unter Ausbildung eines Bodens des Behälters umfasst,
wobei beim Abtrennen des Behälters von dem Glasrohr-Halbzeug ein Hals des Behälters vorgeformt wird, der Behälter von einer Haltevorrichtung kopfüber aufgenommen wird und sich der Boden des Behälters allmählich von dem Glasrohr-Halbzeug durch Zusammensacken einer Wand des Glasrohrs ausbildet.

14. Verfahren nach Anspruch 13, weiterhin umfassend eine weitere Bearbeitung des Bodens des Behälters, mit zumindest einem der folgenden Schritte:
Bearbeiten des Bodens des Behälters mit mindestens einem Brenner, um den Boden grob zu formen;
weitere Bearbeitung des Bodens mit mindestens einem Brenner, um den Boden flach zu formen;
Pressen des Bodens in eine Formmatrix unter Aufwenden eines Gasdrucks, insbesondere im Bereich 0,5 bis 3,0 bar, um den Boden final zu formen;
Abkühlen des Bodens,
wobei das Glasrohr-Halbzeug bevorzugt nach einem vorübergehenden Zwischenspeichern mit geänderten Prozessparametern, die auf Grundlage der Fehlerdaten für das Glasrohr-Halbzeug ermittelt werden, weiterverarbeitet wird.

15. Verfahren nach Anspruch 13 oder 14, wobei der Behälter ein Behälter zur Aufnahme von pharmazeutischen, medizinischen oder kosmetischen Substanzen ist, insbesondere ein Vial, eine Karpule oder ein Spritzenkörper.

## Claims

1. A method for processing a semifinished glass tube (1), with the steps:
providing of the semifinished glass tube (1), wherein for the semifinished glass tube defect data is provided and the semifinished glass tube (1) is labeled with at least one mark (3; 4);
reading out of the defect data (2-5; 30-31) for the semifinished glass tube (1) by means of the at least one mark (3; 4), with which the semifinished glass tube (1) is labeled; and
processing of the semifinished glass tube (1), in particularly including an at least sectionally conducted thermal forming; wherein
the processing of the semifinished glass tube (1) is adjusted to the defect data (2-5; 30-31), which has been read out for the semifinished glass tube (1), under the control of an electronic control device; wherein
the defect data relates to information about the quality of the respective semifinished glass tube, which is determined in the production of the tube, and
the defect data furthermore contains information about the location and position and preferably also about the size of the defect of the semifinished glass tube.

2. The method according to claim 1, wherein the adjustment of the processing of the semifinished glass tube does not comprise control or regulation of a process parameter, which relates to an at least sectionally conducted thermal forming of the semifinished glass tube.

3. The method according to claim 1 or 2, wherein the adjustment of the processing of the semifinished glass tube (1) comprises a sorting out or temporary intermediate storage of a semifinished glass tube, when on the basis of the defect data for the semifinished glass tube is determined that the processing of the semifinished glass tube with current process parameters is not possible or only possible with an insufficient quality.

4. The method according to one of the preceding claims, wherein the defect data contains defect information for the whole length of the semifinished glass tube (1), or
wherein the defect data is each provided for subsections of the semifinished glass tube (1) of a predetermined length (1) in a longitudinal direction (z) of the semifinished glass tube (1).

5. The method according to one of the preceding claims, wherein the semifinished glass tube (1) is furthermore provided classified into one of several classes according to the averaged defect data.

6. The method according to one of the preceding claims, wherein the defect data, which relates to information about the quality of the respective semifinished glass tube, contains at least one of the following information about defects of the semifinished glass tube:
inclusions in a wall of the semifinished glass tube, including bubbles, nodes, crystalline regions and the like; mechanical damages on the surface or in the volume of the semifinished glass tube, including scratches, material abrasion; inhomogeneities on the surface or in the volume of the semifinished glass tube, including regions having another optical refractivity and optical streaks; defect type.

7. The method according to one of the preceding claims, wherein the defect data furthermore contains location-resolved information in circumferential direction of the semifinished glass tube about the location and position and preferably also about the size of the defect of the semifinished glass tube.

8. The method according to one of the preceding claims, wherein
the at least one mark preferably contains a tube identification information (4), by means of which the defect data for the semifinished glass tube is read out from a data storage unit or a data bank (12), or
the defect data for the semifinished glass tube is preferably contained in further marks (2) on the semifinished glass tube or in at least one further mark section (5) of the at least one mark (3; 4) on the semifinished glass tube.

9. The method according to claim 8, wherein the at least one mark (3; 4) has been applied by means of one of the following processes:
directly marking of a defect by mechanically grooving, grooving by laser treatment, burning in of a pigment dye with a laser, inkjet printing, laser marking; applying, in particularly imprinting, of a line mark or matrix code mark encoding the defect data or a data link to it; adhesively bonding of an adhesive label encoding the defect data or a data link to it; applying of an RFID tag at the semifinished glass tube encoding the defect data or a data link to it; or
wherein the at least one mark (3; 4) is created by interaction of a laser beam with the glass of the semifinished glass tube.

10. The method according to claim 9, wherein the at least one mark (3; 4) is created by interaction of a laser beam with the glass of the semifinished glass tube at temperatures which are above the transformation temperature of the glass in a wall of the semifinished glass tube, in particularly as digital matrix code (DMC).

11. The method according to claim 9 or 10, wherein the at least one mark (3; 4) is optically read out without contact to read out the defect data (2-5; 30-31) for the semifinished glass tube.

12. The method according to one of the preceding claims, in which at least one semifinished glass tube prior to the processing is measured and evaluated, and
measured variables and evaluation data are compared with the defect data for the at least one semifinished glass tube to determine a deviation information, wherein
the processing of a majority of semifinished glass tubes is adjusted to the defect data (2-5; 30-31), which is read out for the respective semifinished glass tubes, under consideration of the determined deviation information.

13. The method according to one of the preceding claims, wherein the processing of the semifinished glass tube (1) furthermore comprises a local heating of a section of the semifinished glass tube and a cutting-off of a container by cutting off from the semifinished glass tube in the region of the locally heated section under formation of a bottom of the container,
wherein during the cutting-off of the container from the semifinished glass tube a neck of the container is preformed, the container is picked up upside down by a holding device and the bottom of the container is gradually formed from the semifinished glass tube by collapsing of a wall of the glass tube.

14. The method according to claim 13, furthermore comprising a further treatment of the bottom of the container, with at least one of the following steps:
treating of the bottom of the container with at least one burner to roughly form the bottom;
further treating of the bottom with at least one burner to form the bottom flat;
pressing of the bottom into a mold matrix using a gas pressure, in particularly in the range of 0.5 to 3.0 bar, to finally form the bottom;
cooling of the bottom,
wherein the semifinished glass tube preferably after a temporary intermediate storage is processed with changed process parameters, which are determined on the basis of the defect data for the semifinished glass tube.

15. The method according to claim 13 or 14, wherein the container is a container for holding pharmaceutical, medical or cosmetic substances, in particularly a vial, a carpule or a syringe body.

## Revendications

1. Procédé de traitement ultérieur d'un tube de verre semi-fini (1), ledit procédé comprenant les étapes suivantes :
- fournir le tube de verre semi-fini (1), des données de défaut pour le tube de verre semi-fini étant fournies et le tube de verre semi-fini (1) étant caractérisé au moyen d'au moins un marquage (3 ; 4) ;
- lire les données de défaut (2-5 ; 30-31) pour le tube de verre semi-fini (1) sur la base de l'au moins un marquage (3 ; 4) avec lequel le tube de verre semi-fini (1) est caractérisé ; et
- effectuer sur le tube de verre semi-fini (1) un traitement ultérieur incluant notamment un formage thermique effectuée au moins par portions ;
dans lequel le traitement ultérieur du tube de verre semi-fini (1) est adapté aux données de défaut (2-5 ; 30-31) lues pour le tube de verre semi-fini (1) sous la commande d'un dispositif de commande électronique ;
dans lequel les données de défaut concernent une information sur la qualité du tube de verre semi-fini respectif qui est déterminée lors de la fabrication du tube, et
les données de défaut contiennent également une information sur l'emplacement et la position et de préférence également sur la taille du défaut du tube de verre semi-fini.

2. Procédé selon la revendication 1, dans lequel l'adaptation du traitement ultérieur du tube de verre semi-fini ne comprend aucune commande ou régulation d'un paramètre de processus qui concerne un formage thermique du tube de verre semi-fini effectué au moins par portions.

3. Procédé selon la revendication 1 ou 2, dans lequel l'adaptation du traitement ultérieur du tube de verre semi-fini (1) comprenant un tri ou un stockage temporaire d'un tube de verre semi-fini s'il est déterminé sur la base des données de défaut pour le tube de verre semi-fini que le traitement ultérieur du tube de verre semi-fini n'est pas possibles avec les paramètres de processus actuels ou n'est possible qu'avec une qualité insuffisante.

4. Procédé selon l'une des revendications précédentes, dans lequel les données de défaut contiennent une information de défaut pour toute la longueur du tube de verre semi-fini (1), ou
dans lequel les données de défaut sont fournies dans chaque sous-portions du tube de verre semi-fini (1) d'une longueur prédéterminée (1) dans une direction longitudinale (z) du tube de verre semi-fini (1).

5. Procédé selon l'une des revendications précédentes, dans lequel le tube de verre semi-fini (1) est en outre fourni de manière classée en une parmi une pluralité de classes selon les données de défaut moyennées.

6. Procédé selon l'une des revendications précédentes, dans lequel les données de défaut relative à l'information sur la qualité du tube de verre semi-fini respectif contiennent au moins une des informations suivantes sur les défauts du tube de verre semi-fini:
des inclusions dans une paroi du tube de verre semi-fini, y compris des bulles, des nœuds, des zones cristallines et similaires ; des endommagements mécaniques sur la surface ou dans le volume du tube de verre semi-fini, y compris des rayures, l'abrasion de matière ; des inhomogénéités sur la surface ou dans le volume du tube de verre semi-fini, y compris des zones d'une vergence optique différente et des stries optiques ; type de défaut.

7. Procédé selon l'une des revendications précédentes, dans lequel les données de défaut contiennent en outre une information résolue spatialement dans la direction circonférentielle du tube de verre semi-fini sur l'emplacement et la position et de préférence également la taille du défaut dans le tube de verre semi-fini.

8. Procédé selon l'une des revendications précédentes, dans lequel
l'au moins un marquage contient de préférence une information d'identification de tube (4) sur la base de laquelle les données de défaut pour le tube de verre semi-fini sont lues dans une mémoire de données ou une base de données (12), ou
les données de défaut pour le tube de verre semi-fini sont de préférence contenues dans d'autres marquages 2) sur le tube de verre semi-fini ou dans au moins une autre portion de marquage (5) de l'au moins un marquage (3 ; 4) sur le tube de verre semi-fini.

9. Procédé selon la revendication 8, dans lequel l'au moins un marquage (3 ; 4) a été appliqué au moyen d'un des procédés suivants :
effectuer un marquage direct d'un défaut par entaillage mécanique, effectuer un entaillage par traitement laser, brûler un pigment de couleur avec un laser, effectuer une impression par jet d'encre, effectuer un marquage au laser ; appliquer, notamment par impression, un marquage à barres ou un marquage à code matriciel qui code les données de défaut ou un lien de données avec celles-ci ; coller un autocollant qui code les données de défaut ou un lien de données avec celles-ci ; fixer au tube de verre semi-fini une étiquette RFID qui code les données de défaut ou un lien de données avec celles-ci ; ou
dans lequel l'au moins un marquage (3 ; 4) est généré par interaction d'un faisceau laser avec le verre du tube de verre semi-fini.

10. Procédé selon la revendication 9, dans lequel l'au moins un marquage (3 ; 4) est généré par interaction d'un faisceau laser avec le verre du tube de verre semi-fini à des températures supérieures à la température de transformation du verre en une paroi du tube de verre semi-fini, notamment sous forme de code matriciel numérique (DMC).

11. Procédé selon la revendication 9 ou 10, dans lequel l'au moins un marquage (3 ; 4) est lu optiquement et sans contact afin de lire les données de défaut (2-5 ; 30-31) pour le tube de verre semi-fini (1).

12. Procédé selon l'une des revendications précédentes, dans lequel
au moins un tube de verre semi-fini est mesuré et évalué avant d'effectuer le traitement ultérieur, et
les grandeurs mesurées et les données d'évaluation sont comparées aux données de défaut pour l'au moins un tube de verre semi-fini afin de déterminer une information d'écart, dans lequel
le traitement ultérieur d'une pluralité de tubes de verre semi-finis est adapté aux données de défaut (2-5 ; 30-31), qui sont lues pour les tube de verre semi-finis, avec prise en compte de l'information d'écart déterminée.

13. Procédé selon l'une des revendications précédentes, dans lequel le traitement ultérieur du tube de verre semi-fini (1) comprenant en outre le chauffage local d'une portion du tube de verre semi-fini et la séparation d'un récipient par séparation du tube de verre semi-fini dans la zone de la portion chauffée localement avec formation d'un fond du récipient,
dans lequel un col du récipient est préformé lors de la séparation du récipient du tube de verre semi-fini, le récipient étant reçu à l'envers par un dispositif de retenu et le fond du récipient étant formé progressivement à partir du tube de verre semi-fini par affaissement d'une paroi du tube de verre.

14. Procédé selon la revendication 13, comprenant en outre un traitement supplémentaire du fond du récipient, ledit procédé comprenant au moins l'une des étapes suivantes :
traiter le fond du récipient avec au moins un brûleur pour conférer au fond une forme grossière ;
traiter encore le fond avec au moins un brûleur pour conférer au fond une forme plate ;
presser le fond dans une matrice de moule à l'aide d'une pression de gaz, notamment dans la gamme allant de 0,5 à 3,0 bars afin de conférer au fond une forme finale ;
refroidir le fond,
le tube de verre semi-fini étant soumis à un traitement ultérieur de préférence après stockage temporaire avec des paramètres de processus modifiés qui sont déterminés sur la base des données de défaut pour le tube de verre semi-fini.

15. Procédé selon la revendication 13 ou 14, dans lequel le récipient est un récipient destiné à recevoir des substances pharmaceutiques, médicales ou cosmétiques, notamment un flacon, une carpule ou un corps de seringue.
